Europäisches Patentamt

(19) European Patent Office

Office européen des brevets

(11) **EP 0 734 019 A1**

(12) **EUROPEAN PATENT APPLICATION**
published in accordance with Art. 158(3) EPC

(43) Date of publication:
25.09.1996 Bulletin 1996/39

(21) Application number: 95902919.0

(22) Date of filing: 07.12.1994

(51) Int. Cl.$^6$: **G11B 20/10**, H03M 7/30

(86) International application number:
PCT/JP94/02056

(87) International publication number:
WO 95/16263 (15.06.1995 Gazette 1995/25)

(84) Designated Contracting States:
FR GB NL

(30) Priority: 07.12.1993 JP 306892/93
07.12.1993 JP 306897/93
22.12.1993 JP 325345/93

(71) Applicant: SONY CORPORATION
Tokyo 141 (JP)

(72) Inventors:
- TSURUSHIMA, Katsuaki,
  Sony Corporation
  Tokyo 141 (JP)
- AKAGIRI, Kenzo,
  Sony Corporation
  Tokyo 141 (JP)

(74) Representative: Ayers, Martyn Lewis Stanley et al
J.A. KEMP & CO.
14 South Square
Gray's Inn
London WC1R 5LX (GB)

(54) **INFORMATION PROCESSING METHOD, INFORMATION PROCESSING DEVICE AND MEDIA**

(57) The recording area of a recording medium is separated into a first region and a second region. The basic information among plural channels is recorded in the first region and the remaining subsidiary information is recorded in the second region. As the basic information, digital audio signals of at least the left, center, right, surround left, surround right and sub-woofer channels are recorded. As the subsidiary information, digital audio signals of at least the left center channel, right center channel, delayed center channel, mixed left channel and mixed right channel are recorded. If the information recorded in one of the regions is lost, it is reproduced using the information of the other region during subsequent reproduction. In addition, the digital audio signals of six channels (L, LC, C, SW, RC and R) among the digital audio signals of the eight channels (L, LC, C, SW, RC, R, LB and RB), which digital audio signals of the six channels are psychoacoustically more crucial than those of the remaining two channels, are compression encoded with a higher audibility conforming to the human acoustic sense, while the digital audio signals of the two channels (LB, RB) are encoded with a higher compression ratio. In this manner, compression encoding with higher sound quality may be achieved for the crucial sound, while avoiding the wasteful bit allocation (wasteful byte allocation quantity).

FIG.1a       FIG.1b

FIG.1c       FIG.1d

## Description

TECHNICAL FIELD

This invention relates to an information processing method for encoding multi-channel digital audio signals employed in, for example, a stereo sound system for a motion picture film projection system, video tape recorder or a video disc player, or a so-called multi-surround acoustic system, and decoding the encoded data. The invention also relates to an apparatus for carrying out the information processing apparatus and a medium having the encoded data arrayed thereon.

BACKGROUND ART

There are a variety of techniques for high-efficiency encoding of audio data or speech signals, such as blocking frequency spectrum dividing system, known as transform coding, or a non-blocking frequency spectrum dividing system, known as sub-band coding. In the transform coding, digital audio data on the time domain is divided into time blocks, each of which is transformed into data on the frequency axis by orthogonal transform, and the resulting data on the frequency axis is further divided into plural frequency ranges for encoding from one frequency range to another. In sub-band coding, digital audio data on the time axis is divided into plural frequency ranges for encoding without dividing the time-domain digital audio data into time blocks. In a combination of sub-band coding and transform coding, digital signals representing the audio signals are divided into a plurality of frequency ranges by sub-band coding, and transform coding is independently applied to each of the frequency ranges.

Among known filters for dividing a frequency spectrum into a plurality of frequency ranges is the quadrature mirror filter (QMF), as discussed in, for example, R.E. Crochiere, Digital Coding of Speech in Sub-bands, 55 BELL SYST. TECH. J. No.8 (1976). The technique of dividing a frequency spectrum into equal-width frequency ranges is discussed in Joseph Rothweiler, Polyphase Quadrature Filters- A New Sub-band Coding Technique, ICASSP 83 BOSTON.

Among known techniques for orthogonal transform is the technique of dividing the digital input audio signal into frames of a predetermined time duration, and processing the resulting frames using a Fast Fourier Transform (FFT), discrete cosine transform (DCT) or modified DCT (MDCT) to convert the signals from the time axis into the frequency axis. Discussion of a MDCT may be found in J.P. Princen and A.B. Bradley, Sub-band/Transform Coding Using Filter Bank Based on Time Domain Aliasing Cancellation, ICASSP 1987.

In a technique of quantizing the spectral coefficients resulting from an orthogonal transform, it is known to use sub bands that take advantage of the psychoacoustic characteristics of the human auditory system. In this, spectral coefficients representing an audio signal on the frequency axis may be divided into a plurality of critical frequency bands. The widths of the critical bands increase with increasing frequency. Normally, about 25 critical bands are used to cover the audio frequency spectrum of 0 Hz to 20 kHz. In such a quantizing system, bits are adaptively allocated among the various critical bands. For example, when applying adaptive bit allocation to the spectral coefficient data resulting from MDCT, the spectral coefficient data generated by the MDCT within each of the critical bands is quantized using an adaptively allocated number of bits.

Among known adaptive bit allocation techniques is that described in IEEE TRANS.ON ACOUSTICS, SPEECH AND SIGNAL PROCESSING, VOL. ASSP-25, No.4 (1977 august) in which bit allocation is carried out on the basis of the amplitude of the signal in each critical band. In the bit allocation technique described in M.A. Krassner, The Critical Band Encoder-Digital Encoding of the Perpetual Requirements of the Auditory System, ICASSP 1980, the psychoacoustic masking mechanism is used to determine a fixed bit allocation that produces the necessary signal-to-noise ratio for each critical band.

In high efficiency compression encoding system for audio signals, employing the above-mentioned sub-band coding, a system has already been put to practical use which compresses the digital audio signals (audio data) to about one-fifth by taking advantage of psychoacoustic characteristics of the human auditory system. As the high efficiency encoding system of compressing the audio data to about one-fifth, there is known a so-called adaptive transform acoustic coding (ATRAC) system.

In a stereo or multi-surround acoustic system, such as a motion picturer film projection system, a high definition television, video tape recorder or a video disc player system, as in the usual audio equipment, the tendency is towards handling audio or speech signals over plural channels, such as four to eight channels. In these cases, it has ben desired to perform high efficiency coding for reducing the bit rate.

In professional application, above all, it is preferred to handle multi-channel digital audio signals, such that an equipment handling 8-channel digital audio signals is becoming popular. An example of such equipment handling the 8-channel digital audio signals is a motion picture film projection system. On the other hand, with the stereo or multi-surround acoustic system, such as a high-definition television, video tape recorder or a video disc player, the tendency is similarly to handle multi-channel, such as 4 to 8 channel, audio or speech signals.

With the motion picture film projection system, handling the 8-channel digital audio signals, it is currently practiced to record digital audio signals on the motion picture film over 8 channels, that is a left-, left center-, center-, right center-, right-, surround left-, surround right- and sub-woofer channels. These eight channels, recorded on the motion picture film, are respectively associated with a left speaker, a left center speaker, a center speaker, a right center speaker, a right speaker, a sub-woofer speaker, arranged towards a screen on which the picture reproduced from the picture recording area of the motion picture film is projected by a projector, and a surround left speaker and a surround right speaker, arranged on the left and right sides of the spectators' seats.

For recording the 8-channel digital audio signals on the motion picture film, it is difficult to acquire a region on the motion picture film for recording as many as eight channels of compressed digital audio signals (audio data) linearly quantized with 16 bits with the sampling frequency of 44.1 kHz, such as those for a compact disc (CD).

On the other hand, a motion picture film as a recording medium is susceptible to surface scratches, so that it cannot be practically employed if the digital data as such is directly recorded thereon because of severe data dropout. Thus the role of the error correction code becomes crucial, such that it becomes necessary to effect data compression so that not only the digital data but the correction code can be recorded in the recording region on the film. However, since the coding for compression results in the human speech or the sound from a musical instrument being transmuted from the original sound, it necessary to take some measures for improving the sound quality for crucial sound, such as human speech, if the coding for compression is exploited in a recording format for a recording medium which is in need of faithful regeneration of the original sound, such as the above-mentioned motion picture film.

Of course, the sound regeneration more faithful to the original sound, such as is described above, is required not only for recording speech data on the recording medium, such as the above-mentioned motion picture film, but also for recording speech data, encoded for data compression, on other recording media, such as a magnetic disc, magneto-optical disc, an optical disc, a phase-transition optical disc or a magnetic tape. This applies to the case of recording picture data, encoded for compression, on the above-mentioned recording media.

Such faithful regeneration of the original speech or picture is also desirable when recording digital signals of the speech or picture on the above-mentioned various recording media without encoding for data compression.

In view of the foregoing, it is an object of the present invention to provide a method and apparatus for processing the information capable of encoding and decoding with high sound or picture quality even if the speech or picture is not encoded for compression, and a recording medium having the encoded information recorded thereon.

## DISCLOSURE OF THE INVENTION

The present invention is proposed for achieving the above object, and provides a method for processing the information including encoding the first digital information to be arrayed in plural regions proximate to information regions on a pre-set medium in which the second information is arrayed, and/or decoding the encoded first digital information arrayed in plural regions proximate to regions on the pre-set medium in which the second information is arrayed. The first digital information has the pre-set basic information and the subsidiary information for completing the basic information.

The present invention also provides a method for processing the information for recording the information of plural channels on a recording medium, in which plural recording regions of the recording medium are divided into a first region and a second region, the basic information among plural channels is recorded in the first region as the first digital information and the subsidiary information is recorded in the second region as the second region.

The first digital information includes the sound information, while the second information also includes the sound information.

The basic information is the information of the frequency range lower than that of the subsidiary information and the subsidiary information is a requantized sample of the quantization error of the basic information.

The pre-set medium includes a motion picture film, a disc-shaped recording medium or a communication network.

The plural regions for the first digital information are those between perforations of the motion picture film, between the perforations on the same side of the film, those between the perforations and the edge of the motion picture frame and those between the perforations of the motion picture film and the edge of the motion picture film and between the perforations. The basic information and the supplementary information are arrayed separately between one and the other rows of perforations.

With the information processing method of the present information, the multi-channel audio information is arrayed as the first digital information.

The basic information among the plural channels is the audio information for the left, center and right channels, while the supplementary information is the audio information for the left center and right center channels. The supplementary information may include the information of the delayed center channel, obtained on delaying the center channel audio information, the information of the delayed mixed left channel, obtained on mixing the left channel audio information, left center channel audio information and the surround left channel audio information and delaying the mixed information, and the information of the delayed mixed right channel, obtained on mixing the right channel audio information, right center channel audio information and the surround right channel audio information and delaying the mixed information. The recording medium employed in the recording method of the present invention is a film, the first region is a region between the film perforations and the second region is a longitudinal film region.

In the information processing method of the present information, the basic information and the supplementary information is the high efficiency encoded information. In addition, in the information processing method of the present information, the basic information and the supplementary information are time-domain or frequency-domain samples. Variable bit allocation is done for time-domain or frequency-domain samples of plural channels among different channels and total quantity of bit allocation for the entire channels of the basic information and the supplementary information is rendered substantially constant. In addition, with the information processing method of the present invention, the scale factors for sample data of the basic information are found from the scale factors and word lengths for the sample data of the basic information. In the information processing method of the present invention, a bit allocation quantity to one of plural channels to which a bit quantity exceeding a pre-set constant reference quantity is allocated is resolved into a bit quantity portion of the basic information which is the bit apportionment not including channel bit allocation and not exceeding the reference quantity at most, and a bit quantity portion corresponding to the difference between bit apportionment including channel bit allocation as bit allocation of the subsidiary information and bit apportionment not including channel bit apportionment of the basic information, and variable bit apportionment is done to time-domain or frequency-domain samples of plural channels from channel to channel. The sample data of bit allocation of the subsidiary information is given as a difference between sample data obtained from bit apportionment including channel bit allocation and sample data obtained from bit apportionment not including channel bit allocation.

In the information processing method of the present invention, the same quantization is carried out of sample data in a small-sized block divided along time and frequency. For producing sample data in small-sized block divided along time and frequency, a pre-set blocking frequency analysis consisting in carrying out frequency analyses for each of plural blocks consisting of plural samples is carried out during encoding and pre-set frequency synthesis consisting in carrying out frequency synthesis for data processed with the blocking frequency analyses is carried out during decoding. For producing sample data in a mini-block divided along time and frequency, a pre-set non-blocking frequency analysis consisting in carrying out frequency analyses without blocking is performed during encoding and pre-set non-blocking frequency synthesis is performed on data processed with pre-set non-blocking frequency synthesis. The frequency bandwidth of the non-blocking frequency analyses is selected to be the same in at least two lower most bands and to be broader with increasing frequency in at least the highest frequency band. For the non-blocking frequency analyses, polyphase quadrature filters or quadrature mirror filters may be employed. The blocking frequency analyses include modified discrete cosine transform. In the blocking frequency analyses, the block size is adaptively changed depending upon temporal characteristics of input signals. Such change in block size is carried out independently for each of at least two output bands of the non-blocking frequency analyses.

In the information processing method of the present invention, the sum of bit allocation portions for the basic information and the bit allocation portions for the subsidiary information for respective channels is changed depending on the maximum sample value or the scale factor of each channel. The channel-to-channel bit apportionment is changed with time changes in amplitude information of an energy value, a peak value or a mean value of information signals of each channel.

An apparatus for processing the information includes encoding means for encoding the first digital information to be arrayed in plural regions proximate to information regions on a pre-set medium in which the second information is arrayed, and/or decoding means for decoding the encoded first digital information arrayed in plural regions proximate to information regions on a pre-set medium in which the second information is arrayed. The first digital information has the pre-set basic information and the subsidiary information supplementing the basic information.

An apparatus for processing the information includes encoding means for encoding the first digital information to be arrayed in plural regions divided by information regions on a pre-set medium in which the second information is arrayed, and/or decoding means for decoding the encoded first digital information arrayed in plural regions divided by information regions on a pre-set medium in which the second information is arrayed. The first digital information has the pre-set basic information and the subsidiary information supplementing the basic information.

In the information processing apparatus of the present invention, the first digital information contains the audio information, while the second information also contains the audio information. The basic information is the quantization samples or the information of lower frequency bands than those of the supplementary information. The supplementary information is the re-quantized samples of the quantization error of the basic information.

The pre-set medium includes a motion picture film, a disc-shaped recording medium or a communication network.

The plural regions for the first digital information are those between perforations of the motion picture film, between the perforations on the same side of the film, those between the perforations and the edge of the motion picture frame and those between the perforations of the motion picture film and the edge of the motion picture film and between the perforations. The basic information and the supplementary information are arrayed separately between one and the other rows of perforations.

In the information processing apparatus of the present invention, the multi-channel information is arrayed as the first digital information.

In the information processing apparatus of the present invention, the basic information and the supplementary information are high-efficiency encoded information. The basic information and the subsidiary information are time-domain or frequency-domain samples. Variable bit allocation is performed on the time-domain and frequency-domain samples of plural channels. The apportionment of total bit allocation quantity of the bit allocation quantity for the basic information and the bit allocation quantity of the subsidiary information, summed together, to the entire channels, is set so as to be substantially constant. Meanwhile, the scale factors for sample data of the subsidiary information are found from the scale factors and word lengths of sample data of the basic information.

In the information processing apparatus of the present invention, a bit allocation quantity to one of plural channels to which a bit quantity exceeding a pre-set constant reference quantity is allocated is resolved into a bit quantity portion of the basic information which is the bit apportionment not including channel bit allocation and not exceeding the reference quantity at most, and a bit quantity portion corresponding to the difference between bit apportionment including channel bit allocation as bit allocation of the subsidiary information and bit apportionment not including channel bit apportionment of the basic information. Variable bit apportionment is done to time-domain or frequency-domain samples of plural channels from channel to channel. The sample data of bit allocation of the subsidiary information is given as a difference between sample data obtained from bit apportionment including channel bit allocation and sample data obtained from bit apportionment not including channel bit allocation.

In the information processing apparatus of the present invention, the same quantization is carried out of sample data in a small-sized block divided along time and frequency. For producing sample data in the small-sized block divided along time and frequency, the encoding means is provided with pre-set blocking frequency analysis means for carrying out blocking frequency analyses configured for performing frequency analyses for each block made up of plural samples, while decoding means has pre-set blocking frequency synthesis means for pre-set blocking frequency analyzed data. For producing sample data in the small-sized block divided along time and frequency, the encoding means is provided with pre-set non-blocking frequency analysis means for carrying out non-blocking frequency analyses while decoding means has pre-set non-blocking frequency synthesis means for pre-set non-blocking frequency analyzed data. The frequency bandwidth for the non-blocking frequency analyses is set so as to be equal in at least two lowermost bands. Alternatively, the frequency width of the non-blocking frequency analysis is selected to be broader with increase in frequency in at least the highest frequency band. For the non-blocking frequency analyses, polyphase quadrature filters or quadrature mirror filters may be employed. The blocking frequency analyses include modified discrete cosine transform. In the blocking frequency analyses, the block size is adaptively changed depending upon temporal characteristics of input signals. Such change in block size is carried out independently for each of at least two output bands of the non-blocking frequency analyses.

In the information processing apparatus of the present invention, the sum of bit allocation portions for the basic information and the bit allocation portions for the subsidiary information for respective channels is changed depending on the maximum sample value or the scale factor of each channel. The channel-to-channel bit apportionment is changed with time changes in amplitude information of an energy value, a peak value or a mean value of information signals of each channel.

The encoding means of the information processing apparatus of the present invention includes memory means for separating, in each sync block, a bit allocation sample group of the basic information allocating a bit quantity larger than a pre-set reference quantity for plural channels from the bit allocation sample group of the remaining subsidiary information of the bit allocation ample group of the basic information for plural channels for recording on the pre-set medium. In the information processing apparatus of the present invention, the bit allocation sample group of the basic information and the bit allocation sample group of the subsidiary information are alternately recorded in each channel.

In the information processing apparatus of the present invention, the decoding means decode and reproduce the bit allocation sample group of the basic information for plural channels and the bit allocation sample group of the subsidiary information for plural channels taken out after recording on the pre-set recording medium in separation from each other in one sync block. The decoding means decode and reproduce the bit allocation sample information of each channel alternately recorded in each channel in one sync block and the bit allocation sample group of the subsidiary information. The bit quantity larger than the pre-set reference quantity is allocated depending on whether the allocation bit quantity to the channel is larger than or equal to the reference quantity of the subsidiary information smaller than the pre-set reference quantity.

With a medium of the present invention, the first digital information having the basic information and the subsidiary information completing the basic information is arrayed in plural regions excluding those for arraying the second information. The basic information and the subsidiary information are the information encoded by the above-described method for processing the information.

With the information processing method and apparatus of the present invention, the digital information is encoded, and the first digital information thus encoded is arranged in plural proximate regions and in plural regions divided by information regions in which the second information is arranged, so that the second information is related in its position with the first information on the medium. In addition, since the first digital information has not only the pre-set basic information but also the supplementary information of the basic information, the basic information can be encoded and decoded with high quality using the supplementary information.

Also, according to the present invention, the first digital information contains the audio information, while the second digital information also contains the audio information, so that the present invention may be applied to a variety of applications handling the audio information.

With the information processing method and apparatus according to the present invention, the basic information is quantized samples, while the supplementary information is re-quantized samples of the quantization error of the basic information, so that the signal-to-noise ratio in the encoding and decoding of the basic information may be improved. In addition, if the basic information is the information of the frequency band lower than that of the supplementary information, and if the basic information is e.g., the audio information, the low frequency band which is crucial acoustically may be improved in quality.

The pre-set medium may be a motion picture film, a disc-shaped recording medium or a communication network. If the pre-set medium is a motion picture film, the plural regions for the first digital information may be those between perforations of the motion picture film, between the perforations on the same side of the film, those between the perforations and the edge of the motion picture frame and those between the perforations of the motion picture film and the edge of the motion picture film and between the perforations, in order to make effective utilization of the film regions other than the picture regions. In addition, by separately arraying the basic information and the supplementary information between perforations of one of the rows of the perforations and between perforations of the other row of perforations, the region for the basic information and the supplementary information may be secured, while the number of usable bits may be increased.

According to the present invention, plural recording regions of the recording medium are divided into a first region and a second region, the basic information among the plural channels are recorded in the first region and the remaining supplementary information is recorded in the second regions. Thus, by employing the regions between film perforations as the first region and by employing the longitudinal region as the second region, the opposite side information may be used for regeneration even if one of the regions becomes depleted of the recorded information.

Further, according to the present invention, by arraying the multi-channel audio information as the first digital information, compressing the information with the basic information and the supplementary information as the high efficiency encoded information, performing variable bit allocation for time-domain or frequency-domain samples of the basic information and the supplementary information among different channels and by setting the total bit allocation quantity for the total channels of the sum of the bit allocation quantity to the respective information data so as to be substantially constant, effective bit utilization may be achieved. This may be realized by resolving the bit allocation quantity to the channels to which the bit quantity larger than a pre-set reference quantity is allocated into a bit quantity portion of the basic information which is the bit allocation not containing the channel bit allocation not exceeding a constant reference quantity at most and a bit quantity portion which is a difference between the bit allocation containing the bit quantity portion as the bit allocation for the supplementary information and the bit allocation not containing channel bit allocation of the basic information, and by performing variable bit allocation of respective samples of respective channels among different channels. Meanwhile, the sample data concerning bit allocation to the supplementary information may be given as a difference between sample data resulting from bit allocation containing channel bit allocation and sample data resulting from bit allocation not containing channel bit allocation. The scale factor for sample data of the supplementary information is found from the word length and the scale factor for the sample data of the basic information.

In addition, according to the present invention, the same quantization is effected of the respective sample data in a small-sized block divided as to time and frequency. The sample data in the small-sized block may be obtained by performing pre-set blocking frequency analyses during decoding and by performing pre-set blocking frequency synthesis during decoding, while the sample data may also be obtained by performing pre-set non-blocking frequency analyses during encoding and by performing pre-set non-blocking frequency synthesis during decoding. According to the present invention, the frequency bandwidth of the non-blocking frequency analyses may be equated in at least two lower most frequency bands or may be set to be broader in at least the highest frequency range for matching to the hearing sense. For the non-blocking frequency analyses, polyphase quadrature filters or quadrature mirror filters may be employed. The blocking frequency analyses include modified discrete cosine transform. In the blocking frequency analyses, the block size is adaptively changed depending upon temporal characteristics of input signals. Such change in block size is carried out independently for each of at least two output bands of the non-blocking frequency analyses for enabling frequency analyses matched to input signal characteristics.

In addition, bit allocation matched to input signal characteristics may be achieved by changing the sum of the bit allocation portion for the basic information for the respective channels and that for the supplementary information depending upon the scale factor or the maximum sample values of the respective channels, by changing the channel-to-channel bit allocation by time changes in the amplitude information of the energy values of the information signal of respective channels or the peak or mean values thereof, or by changing the bit allocation for respective channels depending on time changes of the scale factors of the respective channels.

Further, with the information processing apparatus of the present invention, each sync block is divided into a group of bit allocation samples of the basic information allocating the bit quantity larger than a pre-set reference quantity for plural channels and a group of remaining bit allocation samples of the supplementary information of the bit allocation sample groups of the basic information, and these sample groups are recorded by recording means on a pre-set recording medium. Recording of the bit allocation sample group of the basic information and the bit allocation sample group of the supplementary information is effected alternately for respective channels. In the information processing apparatus of the present invention, decoding means effect decoding and reproduction from the bit allocation samples of the basic information and the supplementary information recorded in separated state in one sync block of a pre-set medium. If the respective bit allocation sample groups are alternately recorded from channel to channel, the decoding and reproduction are effected in a similar manner. The decoding means detects a channel for which a bit quantity is larger than a reference quantity based on whether the bit allocation quantity to the channels is larger than or equal to a reference quantity of the supplementary information which is smaller than a constant reference quantity.

With the medium of the present invention, the information encoded in accordance with the information processing method and apparatus of the present invention is arrayed for effective utilization of the arrayable region for improving the quality of the arrayed information.

BRIEF DESCRIPTION OF THE DRAWINGS

Fig.1 shows a motion picture film as an example of the medium of the present invention and the manner in which the first digital information and the second information are arrayed on the motion picture film.

Fig.2 shows a speaker arrangement in an 8-channel digital surround system.

Fig.3 is a block circuit diagram showing a construction of an illustrative example of a compression encoding circuit of an information processing apparatus for carrying out the information processing method of the present invention, with the example being that in which bit apportionment among the channels is not carried out.

Fig.4 is a block circuit diagram showing a construction of an illustrative example of a compression encoding circuit of an information processing apparatus for carrying out the information processing method of the present invention, with the example being that in which bit apportionment among the channels is carried out.

Fig.5 shows frequency and time division of a signal for a compression encoding circuit.

Fig.6 is a block circuit diagram showing an illustrative construction of an adaptive bit allocation circuit for finding bit apportioning parameters for multiple channels in a compression encoding circuit.

Fig.7 is a graph showing bit apportionment among plural channels in a compression encoding circuit.

Fig.8 shows how to find parameters for bit apportionment in consideration of time characteristics of the information signals among plural channels.

Fig.9 is a graph showing the relation between the amount of bit apportioned in accordance with bit apportionment (1) and tonality.

Fig.10 is a graph showing the relation between the amount of bit apportioned in accordance with bit apportionment (1) and time rate of change.

Fig.11 is a graph showing the noise spectrum for uniform apportionment.

Fig.12 is a graph showing a frequency spectrum of information signals and a noise spectrum due to bit apportionment for producing level-dependent acoustic effects.

Fig.13 is a block circuit diagram showing a construction of an adaptive bit allocation circuit for realizing a bit allocation scheme employing both the magnitude of information signals and the acoustically allowable noise spectrum.

Fig.14 is a circuit diagram showing a construction of a circuit for finding the allowable noise level.

Fig.15 is a graph showing an example of a masking threshold by the signal levels of the respective bands.

Fig.16 is a graph showing the information spectrum, masking threshold and the minimum audibility limit.

Fig.17 is a graph showing bit allocation dependent on the signal level for low-tonality information signals and bit allocation dependent on the acoustically allowable noise level.

Fig.18 is a graph showing bit allocation dependent on the signal level for high-tonality information signals and bit allocation dependent on the acoustically allowable noise level.

Fig.19 is a graph showing the quantization noise level for low-tonality information signals.

Fig.20 is a graph showing the quantization noise level for high-tonality information signals.

Fig.21 is a graph showing bit apportionment for eight channels.

Fig.22 is a block circuit diagram showing an illustrative construction of a circuit for dividing the bit allocation.

Fig.23 is a block circuit diagram showing an illustrative construction of an expansion decoding circuit for expansion decoding compression encoded digital audio signals of the respective channels.

Fig.24 is a graph showing bit apportionment for five channels.

Fig.25 is a block circuit diagram showing an illustrative construction of a compression encoding circuit for compression encoding digital audio signals of respective channels of an alternative embodiment.

Fig.26 is a block circuit diagram showing an illustrative construction for determining bit apportionment for respective channels in the alternative embodiment of the compression encoding circuit.

Fig.27 is a block circuit diagram showing an illustrative construction of an expansion decoding circuit for expansion decoding the compression encoded digital audio signals of the respective channels of the alternative embodiment.

Fig.28 shows a disc-shaped recording medium as an alternative example of a medium according to the present invention.

BEST MODE FOR CARRYING OUT THE INVENTION

Referring to the drawings, preferred embodiments of the present invention will be explained in detail.

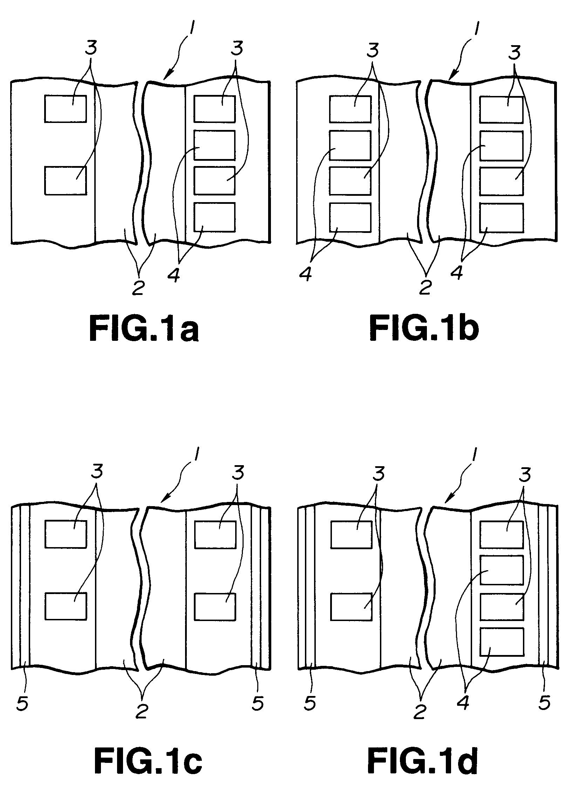

Fig.1 shows how the first digital information and the second information are recorded on a motion picture film 1 as an example of a recording medium according to a first embodiment of the present invention.

The regions for the digital information as later explained include recording regions 4 defined between perforations 3 of a motion picture film 1, as shown in Fig.1a, transversely aligned recording regions 4 between the perforations 3 on both edges of the motion picture film 1 as shown in Fig.1b, longitudinal recording regions 5 between the edges and the perforations of the motion picture film 1 as shown in Fig.1c and recording regions 5 between the edges and the perforations of the motion picture film 1 and recording regions 4 between the perforations 3 of the motion picture film 1 as shown in Fig.1d. It is noted that the digital audio signals (audio data) as the basic information of the first digital information and the quantization error information or subsidiary information as the supplementary information are arrayed separately, for example, between the perforations 3 on one lateral side, e.g., on the right side, and between the perforations 3 on the opposite lateral side, e.g., on the left side, of the motion picture film 1. In the picture recording regions 2 are recorded pictures, that is picture frames, as the second information.

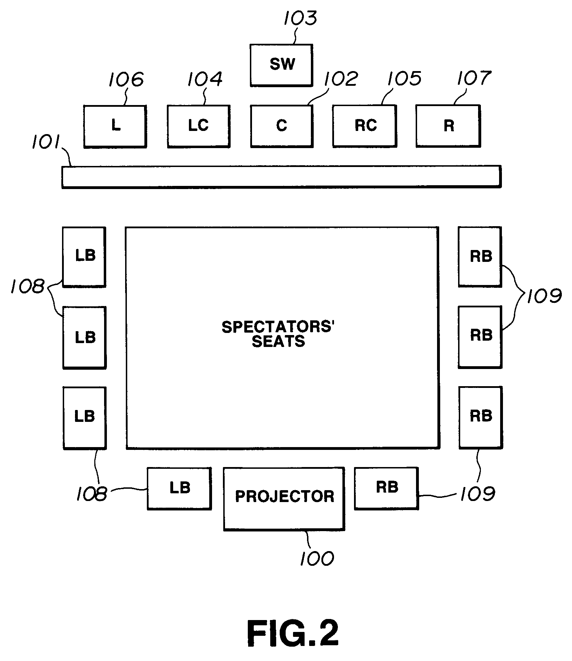

In the present embodiment, the above-mentioned motion picture film 1, for example, is employed as the recording medium. The first digital information recorded on the motion picture film 1 is the multi-channel sound information, as an example. The channels in this case are associated with respective speakers of the digital surround system, as shown for example in Fig.2. That is, associated with the respective speakers are eight channels, namely a center (C) channel, a sub-woofer (SW) channel, a left (L) channel, a left center (LC) channel, a right (R) channel, a right center (RC) channel, a left surround (LB) channel and a right surround (RB) channel.

That is, referring to Fig.2, the respective channels are associated with a left speaker 106, a left-center speaker 104, a center speaker 102, a right-center speaker 105, a right speaker 107, a surround-left speaker 108, a surround-right speaker 109 and a sub-woofer speaker 103, arranged towards a screen 101, on which a picture reproduced from the picture recording regions 2 of the motion picture film is projected by a projector 100.

The center speaker 102, arranged at a center position on the side of the screen 101, outputs the playback sound of the audio data of the center channel. Thus it outputs the crucial playback sound, such as actors' or actresses' dialogue. The sub-woofer speaker 103 for outputting the playback sound by the audio data of the sub-woofer channel outputs the sound which is perceived as vibrations, such as the sound of explosion, rather than as the low-range sound. Thus, in many cases, the speaker 103 is effectively employed for scenes of explosion. The left speaker 106 and the right speaker 107, arranged on the left and right sides of the screen 101, respectively, output the playback sound by the audio data of the left channel and the playback sound by the audio data by the right channel for displaying stereophonic effects. The left center speaker 104 and the right center speaker 105, arranged between the center speaker 102 on one hand and the left and right speakers 106, 107 on the other hand, output the playback sound by the audio data of the left center channel and the playback sound by the audio data of the right center channel and assist in the operation of the left and right speakers 106, 107, respectively. In a motion picture theater having a large-sized screen and capable of holding a large number of guests, localization of the sound image tends to be unstable depending on the seat positions. Thus a more realistic sound image localization may be achieved by annexing the left center speaker 104 and the right center speaker 107. In addition, the surround left speaker 108 and the surround right speaker 109, arranged for surrounding the spectators' seats, output the playback sound by the audio data of the surround left channel and the audio data of the surround right channel thus giving the spectators the impression of being wrapped in a reverberating sound, hand clapping or shout of joy. The above contributes to creation of a more stereophonic sound image.

The information processing method of the embodiment illustrated herein is used for encoding/decoding the first digital information to be recorded on the recording regions 4 or the longitudinal recording regions 5 of the motion picture film 1 employed as a recording medium. The information processing apparatus of the present embodiment is employed for carrying out the information processing method of the present invention.

Referring to the drawings, the information processing apparatus for carrying out the information processing method of the present invention is explained in detail.

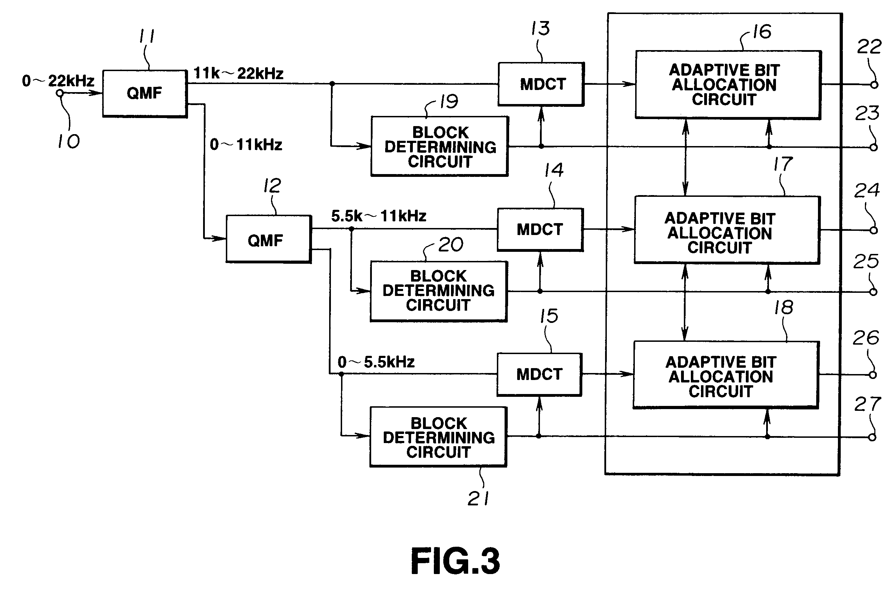

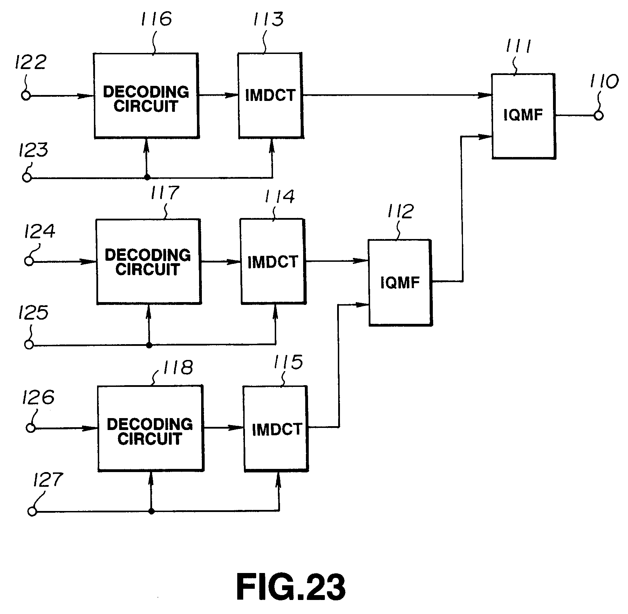

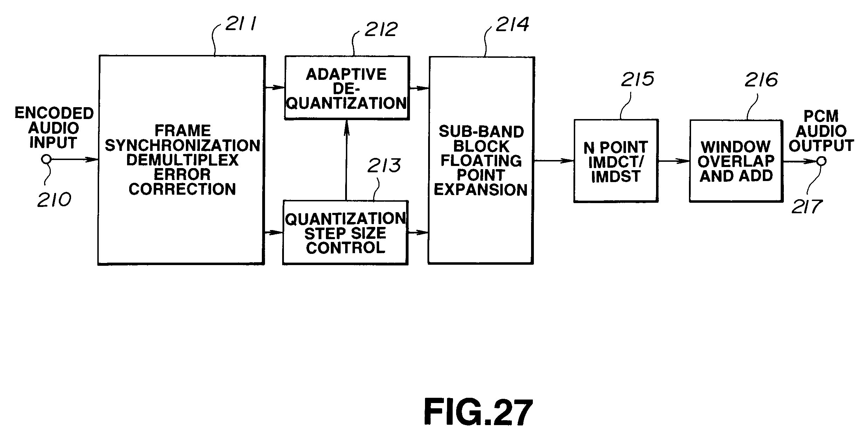

The information processing apparatus for carrying out the information processing method of the present invention has a compression encoding circuit, shown in Figs.3, 4 and 25, and an expansion decoding circuit, shown in Figs.23 and 27. The compression encoding circuit is an encoding means for encoding the first digital information recorded in plural regions, such as the recording regions 4 or the longitudinal recording regions 5 of Fig.1, arrayed in proximity to or on both sides of the picture recording region 2 comprised of picture frames of the motion picture film 1. On the other hand, the expansion decoding circuit is a decoding means for decoding the encoded first digital information from the motion picture film 1 in which there is pre-recorded the first digital information encoded by the compression encoding circuit.

The compression encoding circuit shown in Fig.3 is now explained.

In the compression encoding circuit, shown in Fig.3, an input digital signal is split by a filter bank into plural frequency bands and orthogonal-transformed from band to band to produce spectral data on the frequency axis. The resulting spectral data on the frequency axis are encoded using adaptively allocated bits for each critical band which takes into account the psychoacoustic characteristics of the human auditory system as later explained. For higher frequencies, the critical bands are further divided into sub-bands. The widths of frequency division for the non-blocking method may naturally be of equal widths. In addition, with the present embodiment, the block sizes (block lengths) are adaptively changed prior to orthogonal transform responsive to input signals, and block floating is performed for each critical band or each sub-band divided from the critical band for higher frequencies. The critical band is a frequency band that takes advantage of the psychoacoustic characteristics of the human auditory mechanism. A critical band is the band of noise that can be masked by a pure sound that can be masked by a pure sound that has the same intensity as the noise and has a frequency in the vicinity of the frequency of the noise. The width of the critical band increases with increasing frequency of the noise. The entire audio frequency range of 0 Hz to 22 kHz can be divided into, for example, 25 critical bands.

Referring to Fig.3, a PCM audio signal in the frequency range of 0 Hz to 22 kHz, for example, is supplied to an input terminal 10. The spectrum of the input signal is divided into frequency ranges of 0 to 11 kHz and 11 to 22 kHz by a band-dividing filter 11, such as QMF. The signal in the range of 0 to 11 kHz is further divided by another band-dividing filter 12, such as QMF, into a signal in a range of 0 Hz to 5.5 kHz and a signal in a range of 5.5 kHz to 11 kHz. The signal in the range of 11 kHz to 22 kHz from the band-dividing filter 11 is supplied to a modified discrete cosine transform (MDCT) circuit 13, as an example of an orthogonal transform circuit. The signal in the range of 5.5 kHz to 11 kHz from the band-dividing filter 12 and the signal in the range of 0 Hz to 5.5 kHz from the band-dividing filter 12 are supplied to MDCT circuits 14 and 15, respectively.

The MDCT circuits 13, 14 and 15 process the signals of the respective bands from the band-dividing filters 11, 12 with MDCT based upon the block sizes determined as described below by the block size determining circuits 19, 20 and 21 associated with the respective bands. In this manner, the respective band signals are converted to spectral data in the frequency domain or MDCT coefficient data.

The block size information as determined by the block determining circuits 19, 20 and 21 is supplied to adaptive bit allocation and encoding circuits 16, 17 and 18, respectively, while being outputted at output terminals 23, 25, 27, respectively.

On the other hand, outputs of the MDCT circuits 13, 14 and 15 are supplied to adaptive bit allocation encoding circuits 16, 17 and 18, respectively, where the energy for the critical bands or sub-bands further divided from the critical bands for the higher frequencies are found by calculating root mean squares of respective amplitude values in the respective bands. Of course, the scale factors as later explained may be employed for the subsequent bit allocation, in which case new arithmetic-logical operations for finding the energy may be dispensed with thus resulting in saving of the hardware scale. The peak or mean values of the amplitude values may also be employed in place of the band-based energy. The spectral data in the frequency domain or MDCT coefficient data, obtained by MDCT operations by the MDCT circuits 13 to 15, are grouped for the critical bands or sub-bands divided further from the critical bands for higher frequencies, so as to be transmitted to the adaptive bit allocation encoding circuits 16, 17 and 18, respectively.

The spectral data or MDCT coefficient data are requantized, that is normalized and quantized, by the adaptive bit allocation encoding circuits 16, 17 and 18, depending on the above-mentioned block size information and the number of bits allocated for the critical bands or the sub-bands divided further from the critical bands for the higher frequencies. Data encoded by the adaptive bit allocation encoding circuits 16, 17 and 18 are outputted at output terminals 22, 24 and 26, respectively. The adaptive bit allocation encoding circuits 16, 17 and 18 also find the scale factor, that is a factor indicating which signal magnitude has been used as the basis for normalization, and the bit length information, that is an information indicating which bit length has been used for quantization. These two information data are also outputted at the output terminals 22, 24, 26.

The outputs of the output terminals 22 to 27 are combined together so as to be outputs of the respective compression encoding circuits.

In the example of Fig.3, there is shown a construction of a compression encoding circuit for encoding a digital audio signal of an optional channel among plural channels in case bit allocation is done independently for the respective channels. It is also possible to effect bit apportionment for the respective channels.

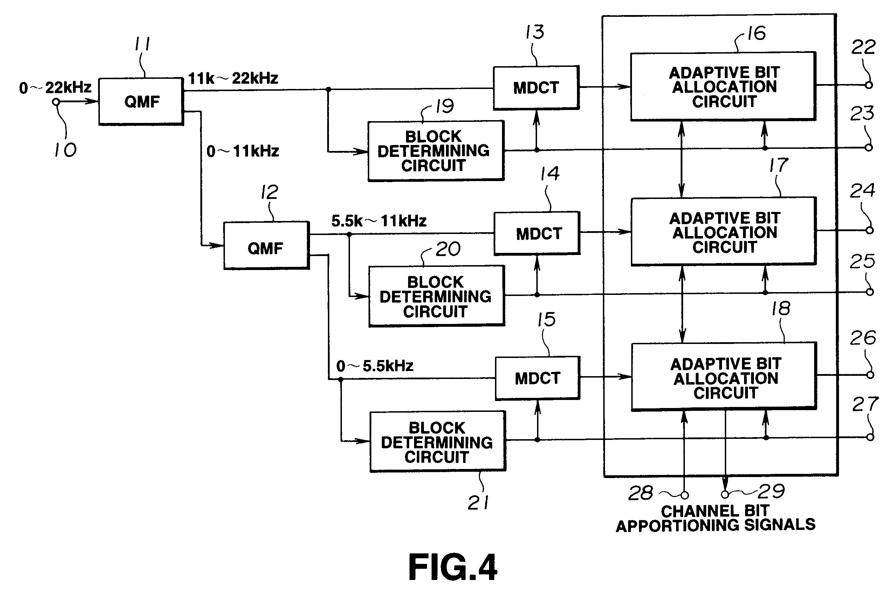

The construction of a compression encoding circuit for encoding the digital audio signal of the optional channel in case bit apportionment is done among the plural channels for compression encoding is shown in Fig.4, in which the components other than the adaptive bit allocation encoding circuits 16, 17 and 18 are basically the same as the corresponding components shown in Fig.3.

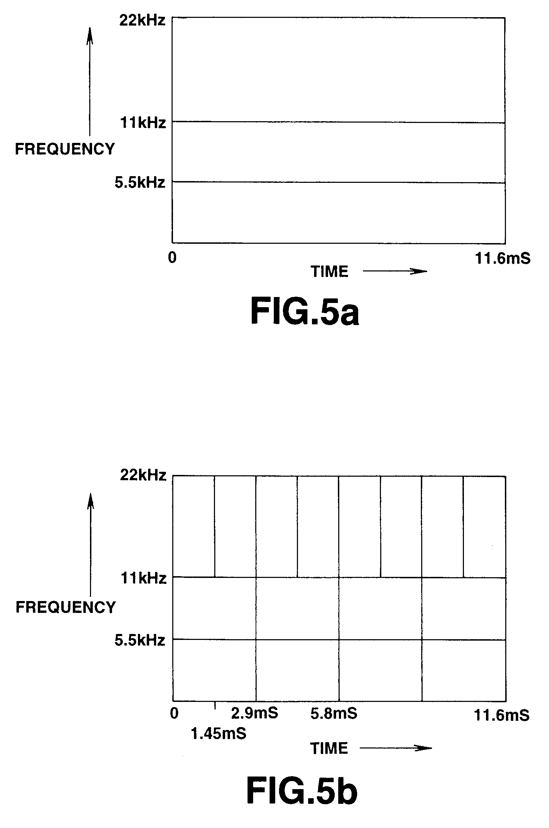

In the compression encoding circuit shown in Fig.4, an illustrative example of the block sizes determined by the MDCT circuits 19 to 21 similar to those shown in Fig.3 is shown in Fig.5a and 5b. Figs.5a and 5b show the long orthogonal transform block size, that is the orthogonal transform block size for the long mode, and the short orthogonal transform block size, that is the orthogonal transform block size for the short mode, respectively. In the illustrative example of Fig.5, each of the three filter outputs has two orthogonal transform block sizes. That is, for the signal in the low frequency range of 0 Hz to 5.5 kHz and for the signal in the mid frequency range of 5.5 kHz to 11 kHz, the number of samples in each block is equal to 128 as shown in Fig.5a or equal to 32 as shown in Fig.5b, when a long block size or a short block size is selected, respectively. On the other hand, for the signal in the high frequency range of 11 to 22 kHz, the number of samples in each orthogonal transform block is set to 256 if the long block length as shown in Fig.5a is selected, whereas, if the short block length is selected, as shown in Fig.5b, the number of samples in each block is set to 32. In this manner, if the short block length is selected, the number of samples in the orthogonal transform block in each band is selected to be the same so that time resolution will be increased and the number of sorts of the windows used for blocking will be decreased with increase in frequency. The block size information, indicating the block sizes as determined by the block determining circuits 19, 20 and 21 in the illustrative example of Fig.4, is routed to the adaptive bit allocation encoding circuits 16, 17 and 18 as later explained, while being outputted at the output terminals 23, 25 and 27.

In the adaptive bit allocation encoding circuits 16, 17 and 18 shown in Fig.4, the spectral data or MDCT coefficient data are re-quantized, that is normalized and quantized, depending on the block size information and on the number of bits allocated to the critical bands or the sub-bands further divided from the critical bands for higher frequencies. At this time, the adaptive bit allocation encoding circuits 16, 17 and 18 check the channel bit apportionment among the different channels, that is the entire signals for the respective channels, for simultaneously effecting bit apportionment of optimally adaptively distributing the quantity of bits to the respective channels. The channel bit apportionment in such case is done based upon a channel bit apportioning signal supplied via a terminal 28 from an adaptive bit apportioning circuit as later explained. The data encoded in this manner are taken out via the output terminals 22, 24 and 26. The adaptive bit allocation encoding circuits 16, 17 and 18 also find the scale factor indicating the signal magnitude used as the basis for normalization and the bit length information indicating the bit length used for quantization. These information data are simultaneously outputted at the output terminals 22, 24 and 26.

The outputs of the output terminals 22 to 27 are combined together so as to be recorded on the motion picture film 1 of the present embodiment or on a disc-shaped recording medium as later explained. The recording is performed using a magnetic head or an optical head as recording means.

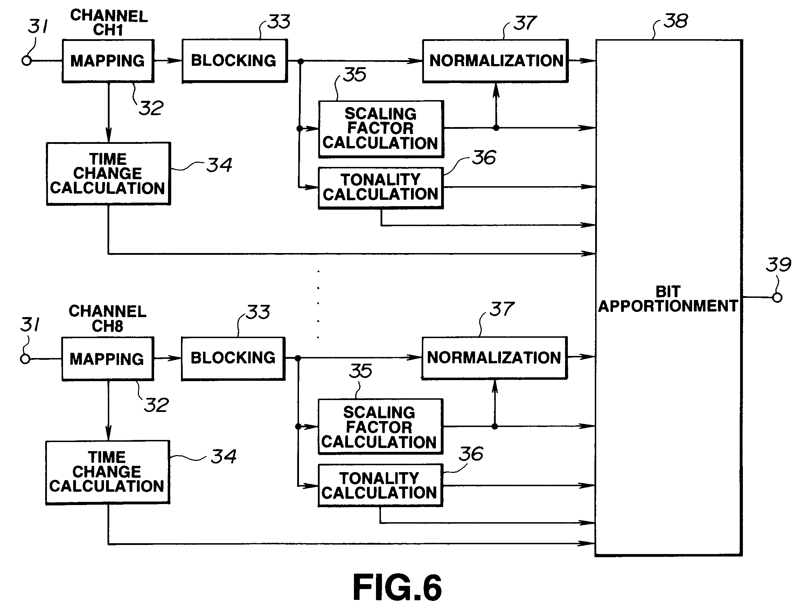

Referring to Fig.6, an illustrative construction and an operation of an adaptive bit apportioning circuit for bit apportionment among the different channels are explained. In the embodiment of Fig.6, bit apportionment is done for eight channels in the same manner as for Fig.2.

In Fig.6, common portions of the respective channels are explained with reference to a channel 1 as an example. As for the remaining channels, the same reference numerals are used and the corresponding description is omitted for simplicity. An input information signal for this channel CH1 is supplied to an input terminal 31 for the channel CH1. The terminal 31 corresponds to the terminal 29 shown in Fig.4. This input information signal is developed by a mapping circuit 32 from a signal on the time domain to a signal on the frequency domain. If a filter bank is employed, time-domain samples are produced as sub-band signals. On the other hand, if orthogonal transform is effected directly or after filtering, frequency-domain samples are produced.

These samples are grouped by a blocking circuit 33 into plural samples as units. If the filter bank has been used, plural time-domain samples are grouped as units, whereas, if orthogonal transform is applied directly or after filtering, plural frequency-domain samples are grouped as units.

In the present embodiment, temporal changes of the MDCT time-domain input signals in the course of mapping are calculated by a time change calculating circuit 34.

The samples grouped into plural samples as units in the blocking circuit 33 are normalized by a normalization circuit 37. The scale factors, which are coefficients for normalization, are obtained by a scale factor calculating circuit 35. The tonality value is also found by a tonality calculating circuit 36.

The parameters thus found are used for bit apportionment in a bit apportionment circuit 38. If the number of bits that represent MDCT coefficients and may be used for transmission or recording is 800 kbps for the entire channels, that is the above-mentioned eight channels, the bit apportionment circuit 38 of the present embodiment finds first bit apportionment including channel bit allocation, that is bit allocation for the basic information, and second bit apportionment not including channel bit allocation, that is bit allocation for the basic information.

The technique of the first bit apportionment including channel bit allocation is now explained. Bit allocation is done adaptively in view of the distribution of the scale factors in the frequency domain.

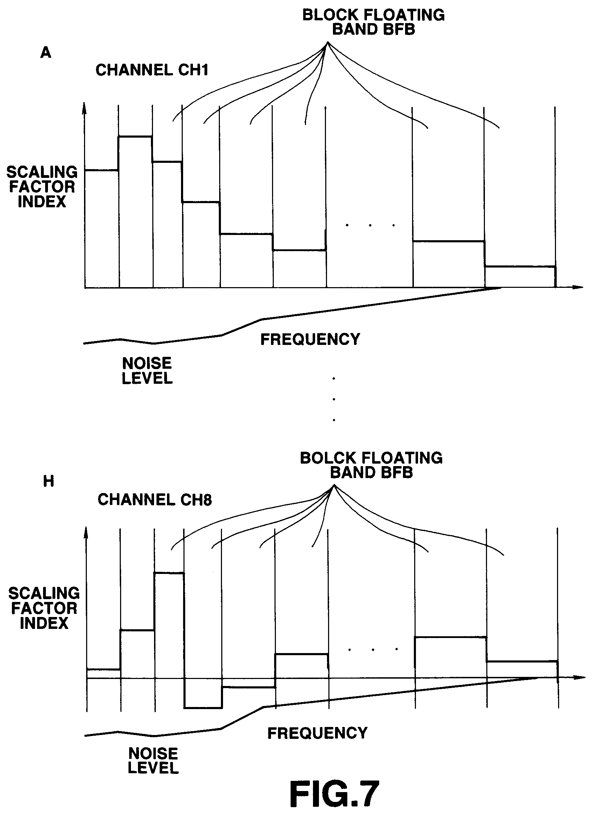

In such case, effective bit allocation may be achieved by effecting bit apportionment among the different channels in consideration of the distribution in the frequency domain of the scale factors of the entire channels. Considering that the signal information data of plural channels are mixed in the same sound field as in the case of speakers to reach left and right ears of a listener, the masking effect may be assumed to operate on the sum of signals of the entire channels. Thus it is effective to perform bit apportionment so that the noise level of each channel will be equal for the same band, as shown in Figs.7A and 7H. One of the methods for achieving this is to perform bit allocation proportionate to the magnitude of the scaling factor index. That is, bit apportionment is achieved by the following equations:

$$Bm = B^*(\Sigma SFn)/S$$

$$S = \Sigma(\Sigma SFn)$$

where $Bm$ is the amount of bit allocation for each channel, $B$ is the amount of bit allocation for the entire channels and $SFn$ is a scale factor index and corresponds to an approximate logarithm of a peak value. $n$ is the block floating band number in each channel, $m$ is a channel number and $S$ is the sum of scale factor indices of the entire channels. In Fig.7, only the charts for the channels CH1 and CH8 are shown, while those for the remaining channels are not shown.

In addition to the above, the bit apportionment circuit 38 has a process of detecting time change characteristics of the signals of the respective channels for changing the channel-based amounts of bit allocation by these characteristics as indices. These indices indicating the time changes may be found by the following process.

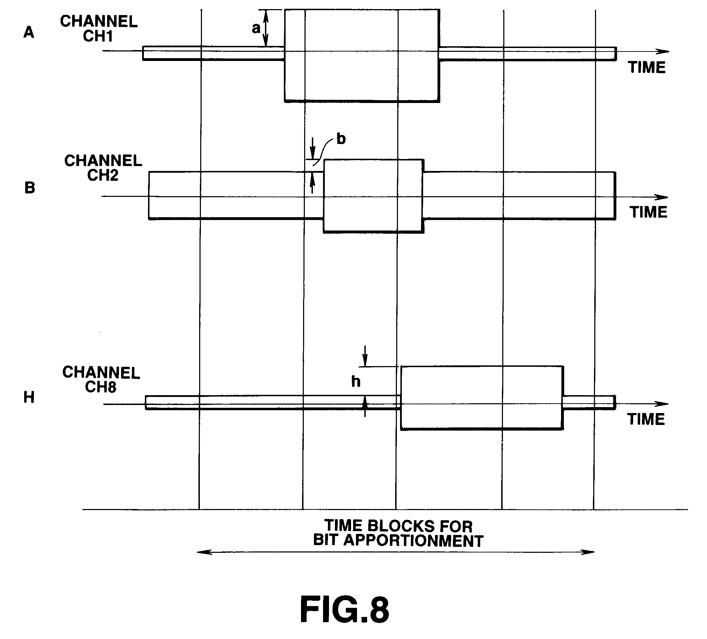

Assuming that there are eight channels, as shown in Figs.8A to 8H, each of bit allocating time blocks, which are time units for bit allocation for information input signals of the respective channels, is divided temporally into four time sub-blocks, as time units for bit allocation, and peak values of the respective time sub-blocks are found. Bit distribution among the respective channels is done responsive to the magnitudes of the difference between the peak values of the respective sub-blocks when these peak values are changed from smaller value to larger values. Assuming that C bits are available for this bit allocation in the eight channels, and that the magnitudes of the differences at the points of transitions from smaller to larger values in the respective sub-blocks of the respective channels are denoted as $a$, $b$, $c$, $d$, $e$, $f$ and $g$ decibels (dB), the numbers of bits that may be apportioned are $C^*a/T$, $C^*b/T$, ......$C^*h/T$. That is, the higher the rate of increase of the magnitude of the signal information of a given channel, the more the number of bits apportioned to such channel. In Fig.8, only the channels CH1, CH2 and CH8 are shown, while the remaining five channels are not shown.

The second bit apportionment scheme, not including the channel bit allocation, is now explained.

As the second bit apportionment scheme, not including the channel bit allocation, the bit apportionment scheme comprising two bit apportionment schemes is explained. The second bit apportionment scheme corresponds to the bit allocation procedure by the adaptive bit allocation encoding circuits 16 to 18 shown in Fig.4.

These two bit apportionment schemes are termed bit apportionment scheme(1) and bit apportionment scheme(2). In the following bit apportionment scheme, the bit rates that can be used for the respective channels are previously fixed for the respective channels. For example, a higher bit rate of 147 kbps is used for a channel handling the crucial sound, such as speech. On the other hand, 2 kbps at most is allocated for a channel which is not crucial, and 100 kbps is allocated for the remaining channels.

The bit quantity employed for bit allocation scheme (1) is determined first of all. To this end, the tonality information of the spectral information of the signal information (a) and the time change information of the signal information (b) are employed.

Turning now to the tonality information, the sum of the absolute values of the differences between adjacent signal spectral values divided by the number of the spectral signals is employed as an index. Expressed more simply, a mean value of the differences between the scale factor indices of the adjacent block-based scale factors for block floating is employed. The scale factor indices correspond to the logarithm of the approximate scaling factors. In the present embodiment, the number of bits to be used for bit apportionment scheme (1) is set to a maximum of 80 kbps and a minimum of 10 kbps in association with the tonality-indicating value. The bits apportioned for the respective channels are herein set uniformly to 100 kbps for simplicity.

The tonality is calculated by the following equation:

$$T = (1/WLmax)(\Sigma ABS(SFn - 1))$$

where $WLmax$ is the maximum value of the word length equal to 16, $SFn$ is the index value for the scale factor corresponding to the logarithm of the approximate peak value. $n$ is the block floating band number.

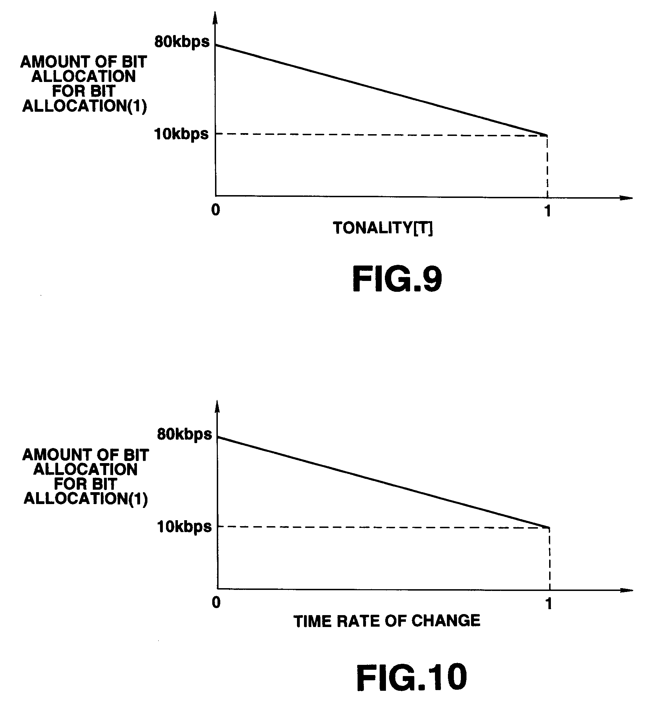

The number of apportioned bits and the tonality information T thus found are correlated with each other as shown in Fig.9.

In addition, with the present embodiment, the bit distribution ratio between the bit apportionment (1) and at least one other bit apportionment to be annexed thereto depends on time change characteristics of the information signals. In the present illustrative embodiment, the peak values of the signal information of respective neighboring blocks are compared to one another for each time interval obtained by subdividing the orthogonal transform time block size for finding the time area in which the amplitude of the information signals rise steeply. The ratio of bit apportionment (bit division) is determined based upon the state or degree of steep rise in the signal amplitude.

The time rate of change is found by the following equations:

$$Vt = \Sigma Vm$$

$$Vav = (1/Vmax)*(1/Ch)Vt$$

where Vt is the sum of the changes from the smaller to the larger values of the peak values of the time sub-blocks of the respective channels, expressed in dB, and Vm is the largest one of changes from the smaller to the larger values of the peak values of the time sub-blocks of the respective channels, with the maximum value being limited to 30 dB and denoted as Vmax, expressed in dB. m denotes the channel number, Ch denotes the number of channels and Vav denotes a change from a smaller to a larger value of the peak value of the time sub-blocks in dB, averaged over the channels.

The time rate of change Vav thus found and the quantity of bit apportionment (1) are correlated with each other as shown in Fig.10. The number of apportioned bits of the bit apportionment scheme (1) is ultimately found by the following equation:

$$B = 1/2(Bf + Bt)$$

where B, Bf and Bt denote the ultimate quantity of bit apportionment to the bit apportionment scheme (1), the quantity of apportioned bits as found from Tva and the quantity of apportioned bits as found from Vva.

The bit apportionment (1) is the scale factor dependent bit apportionment in the frequency domain and in the time domain.

Once the quantity of bits employed for bit apportionment scheme (1) is determined in this manner, the bit apportionment scheme (2) for bits not used in the bit apportionment scheme (1) is determined. Various sorts of bit allocation are carried out.

First, bits are uniformly allocated for the totality of sample values.

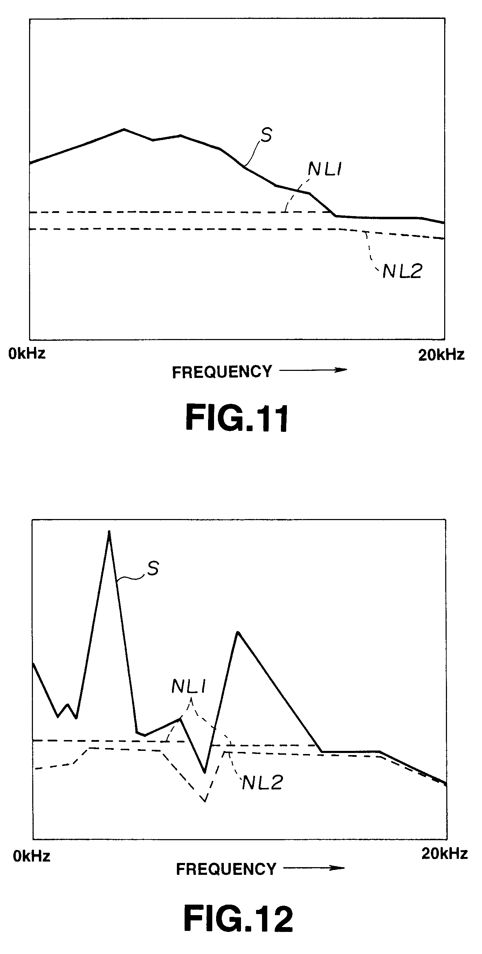

Fig.11 shows an example of the quantization noise spectrum for bit apportionment. In this case, uniform noise level reduction is carried out for the entire frequency range.

Second, frequency spectrum dependent and level dependent bit allocation is carried out for producing acoustic effects.

Fig.12 shows an example of the quantization noise spectrum for bit allocation in this case. In the present example, bit allocation dependent on the spectrum of the information signals is performed. Bit allocation is performed so as to put emphasis on the low range side of the spectrum of the information signals for compensating the decreased masking effects in the low range as contrasted to the high range. This is based on asymmetry of the masking curve and puts more emphasis on the low range in view of masking between neighboring critical bands. Thus the bit allocation is carried out so as to put more emphasis on the low range.

Finally, the sum of the bit apportionment (1) and the values of bit allocation to be added to the bit apportionment (1) is found by the bit apportionment circuit 38 of Fig.6.

In Figs.11 and 12, S, NL1 and NL2 denote the signal spectrum, the noise level caused by uniform allocation to the totality of samples, and the noise level caused by bit allocation for producing an acoustic effect which is dependent on the frequency spectrum and the signal level.

Another bit apportionment scheme not including channel bit allocation is now explained.

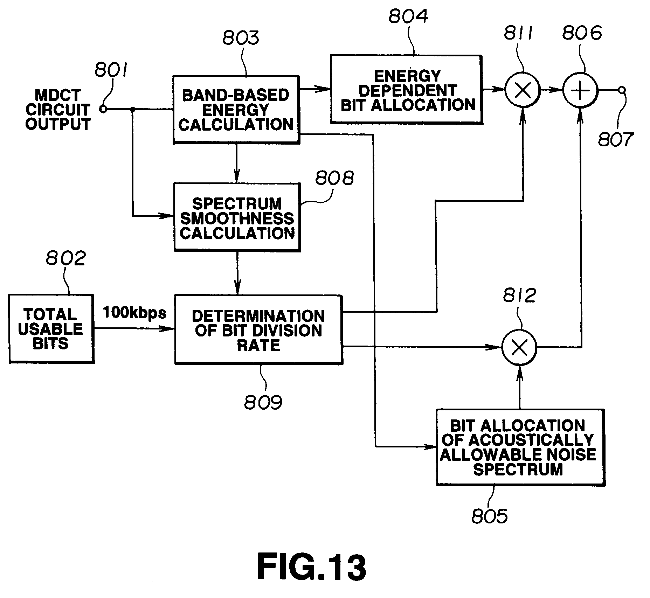

The operation of the adaptive bit allocation circuit in this case is explained by referring to Fig.13. The magnitudes of MDCT coefficients are found from block to block and routed to an input terminal 801. The MDCT coefficients supplied to the input terminal 801 are routed to a band-based energy calculating circuit 803. The band-based energy calculating circuit 803 calculates the signal energy of each critical band and each sub-band divided from the critical band for higher frequency. The band energy calculated by the band-based energy calculating circuit 803 is supplied to an energy-dependent bit allocation circuit 804.

The energy-dependent bit allocation circuit 804 performs bit allocation of producing the white quantization noise with the aid of a certain proportion, herein 100 kbps, of the total number of usable bits from a total usable bit generating circuit 802, herein 128 kbps. The higher the tonality of the input signal, that is the more rough the spectrum of the input signal, the higher is the above proportion in the total number of bits, herein 128 kbps. For detecting roughness or non-smoothness of the input signal spectrum, the sum of the absolute values of the differences of the block floating coefficients of neighboring blocks is used as an index. Of the total number of bits, thus found, bit allocation is performed in proportion to the logarithmic values of the band-based energy values.

A bit allocation calculation circuit 805, performing bit allocation in a manner dependent on the acoustically allowable noise spectrum, finds the allowable noise level for each critical band, in consideration of the so-called masking effects, based upon the spectral data distributed according to the critical bands, and allocates bits obtained by subtracting the energy-dependent bits from the total usable bits for deriving the acoustically allowable noise spectrum. The energy-dependent bits and the acoustically allowable noise level dependent bits are summed together and used for re-quantizing the spectral data or the MDCT coefficient data. The number of bits used for re-quantization is allocated by the adaptive bit allocation and encoding circuits 16 to 18 of Fig.4 (or Fig.3) to respective critical bands or sub-bands divided from the critical bands for higher frequencies. The data thus encoded is outputted via the output terminals 22, 24, 26 of Fig.4.

Turning to details of the acoustically allowable noise spectrum calculating circuit in the acoustically allowable noise spectrum dependent bit allocation calculation circuit 805, the MDCT coefficients produced by the MDCT circuits 13, 14 and 15 are routed to the acoustically allowable noise spectrum calculating circuit.

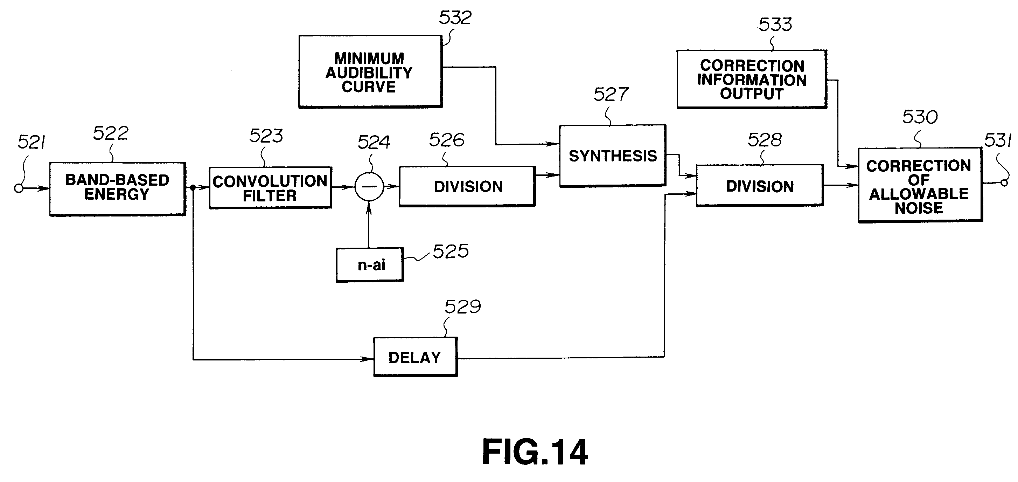

Fig.14 shows, in a schematic block circuit diagram, an arrangement of a concrete embodiment of the allowable noise calculating circuit, in which the frequency-domain spectral data from the MDCT circuits 13 to 15 are supplied to an input terminal 521.

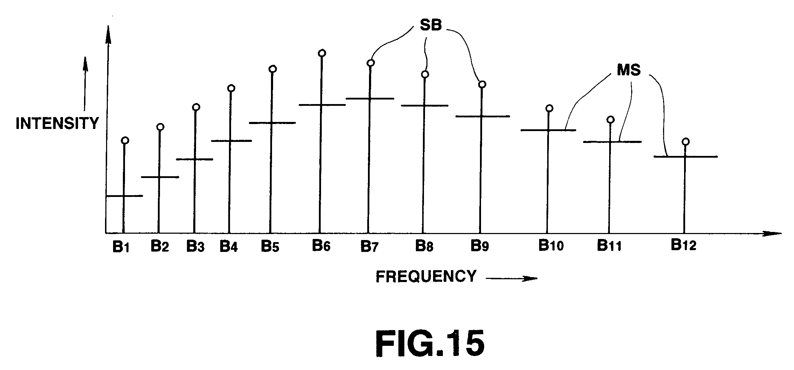

The frequency-domain spectral data is transmitted to a band-based energy calculating circuit 522 in which the energies of the critical bands and the bands divided from the critical bands are found by calculating the sum total of squares of the amplitudes of the spectral components in the respective bands. The amplitude peak values or mean values may also be employed in place of the signal energy in the respective bands. Each spectral component indicating the sum value of each of the respective critical bands, generally termed the Bark spectrum, is indicated as SB in Fig.15. In Fig.15, 12 bands B1 to B12 are shown as indicating the critical bands.

It is noted that an operation of multiplying each spectral component SB by a pre-set weighting function for taking into account the effects of masking is performed by way of convolution. To this end, an output of the band-based energy calculating circuit 522, that is each value of the spectral component SB, is transmitted to a convolution filter circuit 523. The convolution filter circuit 523 is made up of a plurality of delay elements for sequentially delaying input data, a plurality of multipliers, such as 25 multipliers associated with the respective bands, for multiplying outputs of the delay elements with filter coefficients or weighting functions, and an adder for finding the sum of the outputs of the respective multipliers. The masking means the phenomenon in which certain signals are masked by other signals and become inaudible due to psychoacoustic characteristics of the human aural sense. The masking effect may be classified into the time-domain masking effect produced by the time-domain audio signals and concurrent masking effect produced by the frequency-domain signals.

By this masking, any noise present in a masked portion becomes inaudible. In actual audio signals, the noise within the masked range is an allowable noise.

By way of a concrete example of multiplication coefficients or filter coefficients of the respective multipliers of the convolution filter circuit 523, if the coefficient of a multiplier M for an arbitrary band is 1, outputs of the delay elements are multiplied by coefficients 0.15, 0.0019, 0.0000086, 0.4, 0.06 and 0.007 at the multipliers M-1, M-2, M-3, M+1, M+2 and M+3, M being an arbitrary integer of from 1 to 25, for performing convolution of the spectral components SB.

An output of the convolution filter circuit 523 is transmitted to a subtractor 524 which is employed for finding a level $\alpha$ corresponding to the allowable noise level in the convolved region. Meanwhile, the allowable noise level $\alpha$ is such a level which will give an allowable noise level for each of the critical bands by deconvolution as will be described subsequently. The subtractor 24 is supplied with an allowance function (a function representative of the masking level) for finding the level $\alpha$. The level $\alpha$ is controlled by increasing or decreasing the allowance function. The allowance function is supplied from a (N - ai) function generator 25 as will be explained subsequently.

That is, the level $\alpha$ corresponding to the allowable noise level is found from the equation (1):

$$\alpha = S - (n - ai)$$

where $i$ is the number accorded sequentially to the critical bands beginning from the lower side, $n$ and $a$ are constants where a > 0 and S is the intensity of the convolved Bark spectrum. In the equation (1), (n - ai) represents the allowance function. As an example, n = 38 and a = -0.5 may be employed.

The level $\alpha$ is found in this manner and transmitted to a divider 526 for deconvolving the level $\alpha$ in the convolved region. By this deconvolution, the masking threshold is found from the level $\alpha$. This masking threshold becomes the allowable noise level. Although the deconvolution necessitates complex arithmetic-logical steps, it is performed in the present embodiment in a simplified manner by using the divider 526.

The masking threshold is transmitted via a synthesizing circuit 527 to a subtractor 528 which is supplied with an output of the band-based energy detection circuit 522, that is the above-mentioned spectral components SB. The subtractor 528 subtracts the masking threshold from the Bark spectrum SB for masking the portions of the spectral components SB lower than the level of the masking spectrum MS, as shown in Fig.15. The delay circuit 529 is provided for delaying the Bark spectrum SB from the energy detection circuit 522 in consideration of the delay caused in respective circuits upstream of the synthesizing circuit 527.

An output of the subtractor 528 is outputted via an allowable noise correction circuit 530 at an output terminal 531 so as to be transmitted to a ROM, not shown, in which the information concerning the number of the allocated bits is stored previously. The ROM outputs the information concerning the number of allocated bits for each band, depending on an output of the subtraction circuit 528 supplied via an allowable noise correction circuit 530. The output is the level of a difference between the band-based energy and an output of the noise level setting means.

The energy-dependent bits and the acoustically allowable noise level dependent bits are summed together and the corresponding allocation bit number information is transmitted via the terminal 28 of Fig.4 to the adaptive bit allocation and encoding circuits 16 to 18 where the frequency-domain spectral data from the MDCT circuits 13 to 15 are quantized with the numbers of bits allocated to the respective bands.

In sum, the adaptive bit allocation and encoding circuits 16 to 18 quantizes the band-based spectral data with the numbers of bits allocated depending on the level of the difference between the output of the noise level setting means and the peak or energy values of the critical bands or the sub-bands further divided from the critical bands for higher frequencies.

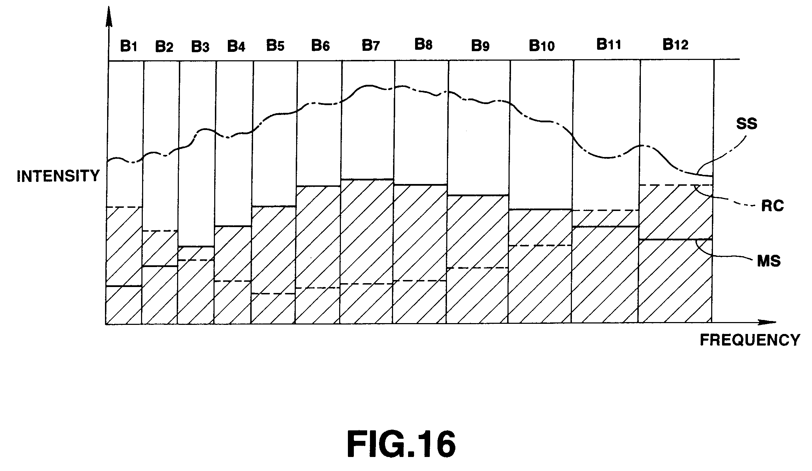

The synthesizing circuit 527 may also be designed to synthesize the masking threshold MS and data denoting the minimum audibility curve RC from the minimum audibility curve generating circuit 532. The minimum audibility curve represents psychoacoustic characteristics of the hearing sense as shown in Fig.16. If the absolute noise level is lower than the minimum audibility curve RC, the noise becomes inaudible. The minimum audibility curve differs with the difference in the playback sound level even although the coding is made in the same manner. However, since there is no marked difference in the manner of the music entering the 16-bit dynamic range in actual digital systems, it may be presumed that, if the quantization noise of the frequency range in the vicinity of 4 kHz most perceptible to the ear is not heard, the quantization noise lower than the level of the minimum audibility curve is not heard in any other frequency range. Thus, if the recording/ reproducing device is employed so that the noise in the vicinity of 4 kHz is not heard, and the allowable noise level is to be obtained by synthesizing the minimum audibility curve RC and the masking spectrum MS, the allowable noise level may be up to the level indicated by hatched lines in Fig.16. In the present embodiment, the level of 4 kHz of the minimum audibility curve is matched to the minimum level corresponding to e.g., 20 bits. In Fig.16, the signal spectrum SS is also shown.

Besides, the allowable noise correction circuit 530 corrects the allowable noise level in the output of the subtractor 528 based on the information of the equi-loudness curve transmitted from a correction information outputting circuit 533. The equi-loudness curve is a characteristic curve concerning psychoacoustic characteristics of hearing sense, and is obtained by finding the sound pressures of the sound at the respective frequencies heard with the same loudness as the pure tone of 1 kHz and by connecting the sound pressures by a curve. It is also known as an equal loudness sensitivity curve. The equi-loudness curve also delineates a curve which is substantially the same as the minimum audibility curve shown in Fig.16. With the equal-loudness curve, the sound in the vicinity of 4 kHz is heard with the same loudness as the sound of 1 kHz, even although the sound pressure is decreased by 8 to 10 dB from the sound of 1 kHz. Conversely, the sound in the vicinity of 10 kHz cannot be heard with the same loudness as the sound of 1 kHz unless the sound pressure is higher by about 15 dB than that of the sound of 1 kHz. Thus it may be seen that the noise exceeding the minimum audibility curve (allowable noise level) preferably has frequency characteristics represented by a curve conforming to the equi-loudness curve. Thus it may be seen that correction of the allowable noise level in consideration of the equi-loudness curve is in conformity to psychoacoustic characteristics of the human aural sense.

The above-described acoustically allowable noise level dependent spectral configuration is produced by bit apportionment employing a certain proportion of the total usable bits, herein 128 kbps. This proportion is decreased with increase in tonality of the input signal.

The technique of bit quantity division between the two bit apportionment schemes is now explained.

Returning to Fig.13, the signal from the input terminal 801 fed with the output of the MDCT circuit is also fed to a spectrum smoothness calculating circuit 808 where spectral smoothness is calculated. In the present embodiment, the sum of the absolute values of the differences between neighboring values of absolute values of signal spectral components divided by the sum of the absolute values of the signal spectral components is calculated as indicating spectral smoothness.

An output of the spectral smoothness calculating circuit 808 is also fed to a bit division ratio decision circuit 809 where the bit division ratio between the energy dependent bit allocation and the acoustically allowable noise spectrum dependent bit allocation is found. In determining the bit division ratio, it is assumed that the larger the output value of the spectral smoothness calculating circuit 808, the lesser the spectral smoothness. Based on this assumption, bit apportionment is so made that more emphasis is put on the bit allocation dependent on the acoustically allowable noise spectrum than on the energy dependent bit allocation. The bit division ratio decision circuit 809 transmits control outputs to multipliers 811, 812 designed to control the proportions of the energy dependent bit allocation and the acoustically allowable noise spectrum dependent bit allocation. If the spectrum is smooth and an output of the bit division ratio decision circuit 809 assumes a value of 0.8 in order to put more emphasis on the energy-dependent bit allocation, an output of the bit division ratio decision circuit 809 to the multiplier 812 is set to 1-0.8 = 0.2. Outputs of the two multipliers are summed together by an adder 806 to give the ultimate bit allocation information which is outputted at an output terminal 807.

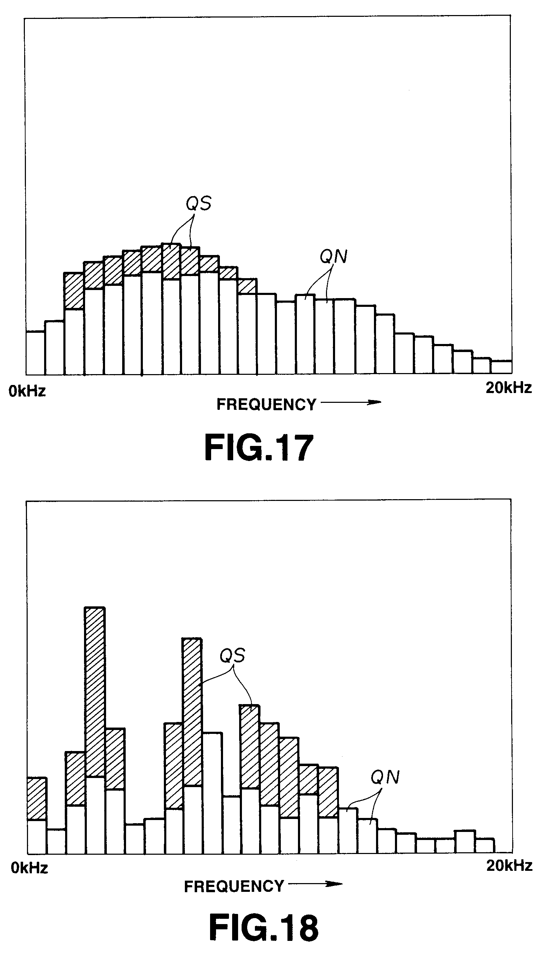

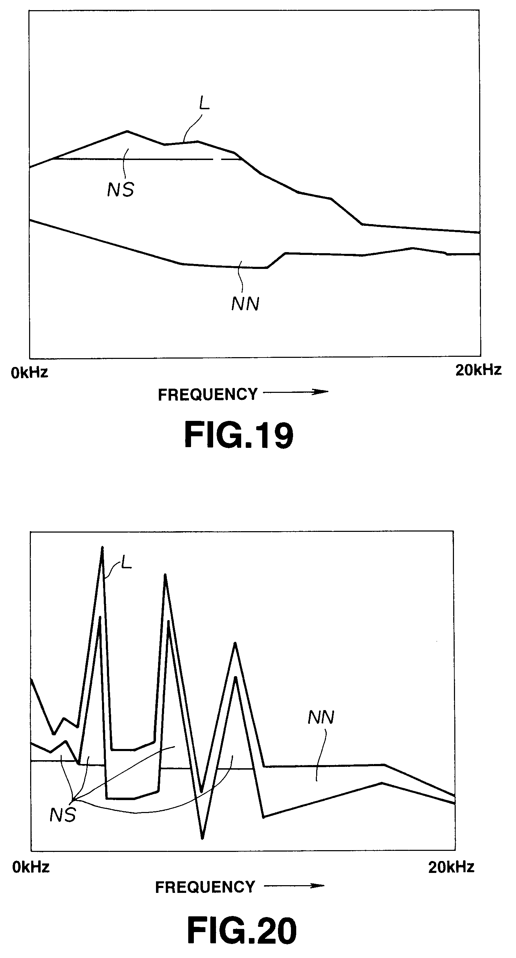

Figs.17,18 and Figs.19, 20 show the bit allocation and the corresponding quantization noise, respectively. Figs.17 and 18 show the bit allocation for a smoother signal spectrum and for a signal spectrum exhibiting high tonality, respectively. In Figs.17, 18, QS and QN denote the signal level dependent bit quantity and the acoustically allowable noise level dependent bit quantity, respectively. In Figs.19, 20, L, NS and NN denote the signal level, noise reduction by signal level dependent bit allocation and noise reduction by the acoustically allowable noise level dependent bit allocation, respectively.

Referring first to Fig.17 showing a smoother signal spectrum, the acoustically allowable noise level dependent bit allocation is useful for achieving a signal-to-noise ratio which is higher for the entire frequency range. However, smaller numbers of bits are used for lower and higher frequency ranges because of low sensitivity of the human ear to these frequency ranges. Although the quantity of bit allocation dependent on the signal energy level is small, more emphasis is put on the mid to low frequency ranges having high signal levels in order to produce a white noise spectrum.

On the other hand, if the signal spectrum exhibits high tonality, as shown in Fig.18, the signal energy level dependent bit allocation becomes prevalent, such that the decrease in the quantization noise is utilized for lowering the noise of an extremely narrow band. The concentration of the acoustically allowable noise level dependent bit allocation is less stringent.

The sum of these two bi allocation sorts results in improved characteristics of a lone spectral input signal, as shown in Fig.13.

The first quantization and the second quantization are carried out in the following manner with the aid of the bit apportionment not including channel bit allocation and the bit apportionment including channel bit allocation realized as described above.

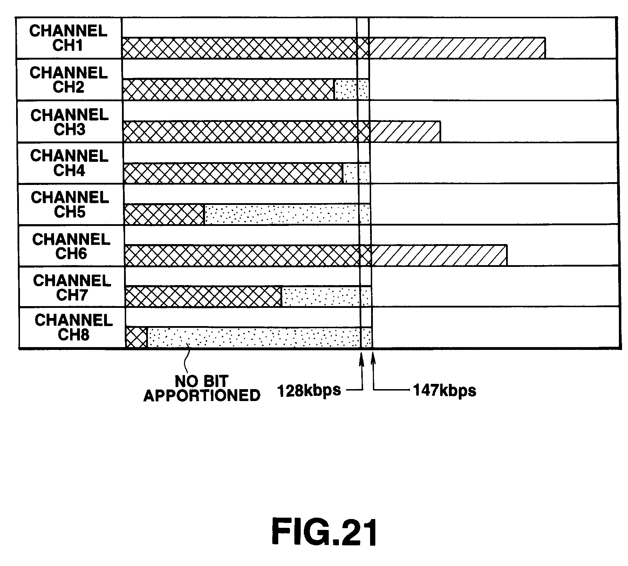

Reference is had to Fig.21. The channels among the eight channels to which bit allocation exceeding 147 kbps is done by the bit apportionment including channel bit allocation are the channel CH1, channel CH3 and the channel CH7.

Each channel for which the bit allocation including the channel bit apportionment exceeds 147 kbps is divided into a portion having a certain bit quantity, such as 128 kbps, as a maximum value, and a portion exceeding 128 kbps.

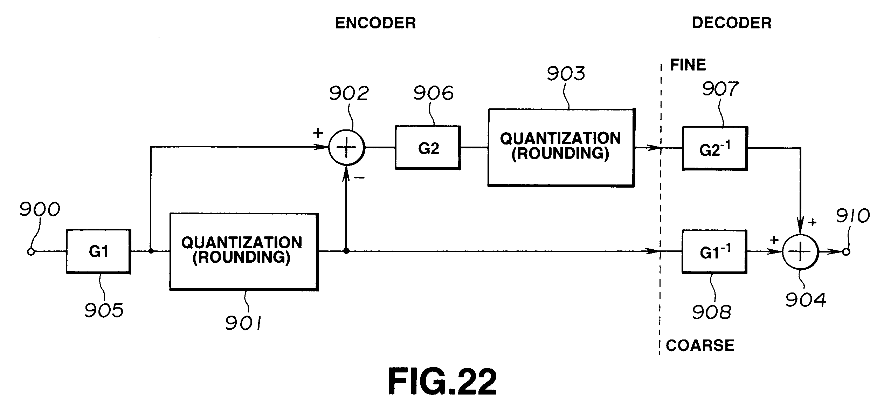

Fig.22 shows an illustrative construction of a circuit employed for this purpose.

In the construction of Fig.22, respective samples of the bit apportionment scheme, in which the bit allocation including bit apportionment exceeds 147 kbps, are subjected to normalization with respect to blocks for plural samples, that is to block floating. At this time, the scaling factor as a coefficient indicating the degree of block floating is obtained.

In Fig.22, an MDCT coefficient (MDCT sample) supplied via an input terminal 900 to a normalization circuit 905 where block floating, that is block-based normalization, is carried out with plural samples as a unit. At this time, scaling factors are produced as coefficients indicating the extent of block floating.

A first quantizer 901 of the next stage carries out quantization with each sample word length of the bit apportionment not including the channel bit allocation. At this time, quantization by round-off is carried out for reducing the quantization noise. A quantized output of the first quantizer 901 is the basic information.

Outputs of the normalization circuit 905 and the quantizer 901 are supplied to a different unit 902 where the difference between the input and the output of the quantizer 901, that is a quantization error, is found. An output of the difference unit 902 is transmitted via a normalization circuit 906 to a second quantizer 903.

The second quantizer 903 employs, from sample to sample, a word length of a difference between each sample word length of the bit apportionment including the channel bit allocation and each sample word length of bit apportionment not including the channel bit allocation. The floating coefficient at this time is automatically determined from the word length and the floating coefficient employed in the first quantizer 901. That is, if the word length employed in the first quantizer 901 is N bits, the floating coefficient employed in the second quantizer 903 is $2^{**}N$.

The second quantizer 903 effects bit allocation including round-off in the same way as the first quantizer 901. A quantized output of the second quantizer 903, that is the quantization error information from the first quantizer 901, is the supplementary information.

Thus the bits of a channel to which bits exceeding 147 kbps have been allocated by the channel bit apportionment including channel bit allocation are divided into a bit apportionment portion not more than 128 kbps and as close to 128 kbps as possible and a remaining bit appointment portion.

The reason two thresholds of 128 kbps and 147 kbps are provided is as follows. Since the remaining bit apportionment portion is also in need of the subsidiary information indicating the word length, 147 kbps is set as the minimum quantity which permits bit allocation of assuring a data region inclusive of the subsidiary information. If the bit apportionment quantity including the channel bit allocation exceeds 128 kbps and is lower than 147 kbps, only the subsidiary information can be written in the data portion exceeding 128 kbps, such that there is no room for writing the sample information, which would be meaningless. For this reason, the above value of 128 kbps is set so that, for such channel, bit apportionment not including the channel bit allocation will be smaller than 128 kbps and as close to 128 kbps as possible.

As for the channel for which bit apportionment including the channel bit allocation is smaller than 128 kbps, such channel bit allocation is directly employed.

As for the magnitudes of the components of the remaining bit apportionment portion, since the scale factor can be calculated from the word length and the scale factor of the bit apportionment (1), as shown in Fig.22, only the word length is required by the decoder.

In this manner, rounded highly efficient quantized outputs may be produced by the quantizers 901, 903.

In a decoder, as a counterpart unit for the encoder of Fig.22, denormalization circuits 908, 907 are provided for carrying out denormalization in connection with the operation carried out by the normalization circuits 905, 906, respectively. Outputs of these denormalization circuits 908, 907 are summed together by an adder 904, a sum output of which is taken out at an output terminal 910.

Fig.23 shows the construction of an expansion decoding circuit which is a counterpart device of the compression encoding circuit shown in Fig.4. The expansion decoding circuit of Fig.23 decodes the compression coded signal for one of respective channels read out from the medium of the present embodiment by e.g., a magnetic head or an optical head as reproducing means.

Referring to Fig.23, quantized MDCT coefficients for the respective bands are fed to input terminals 122, 124 and 126 of the decoder, while the block size information and the information on adaptive bit allocation which have been employed are fed to input terminals 123, 125 and 127. Decoding circuits 116, 117 and 118 cancel bit allocation, using the information on the adaptive bit allocation, and effects expansion and decoding using the block size information.

IMDCT circuits 113, 114 and 115 convert the frequency-domain signal into the time-domain signal. The time-domain signals of the partial frequency ranges are decoded in IQMF circuits 112 and 111 into full-range signals.

In the expansion decoding circuit, those fractions having the pre-set bit quantity, such as 128 kbps, as the maximum bit quantity and those fractions having the bit quantity exceeding 128 kbps in the channels where bit apportionment (1) with 128 kbps of bits or less including the channel bit allocation and bit apportionment (2) exceeding 147 kbps including the channel bit allocation are carried out are decoded by the decoding circuits 116, 117 and 118. At this time, the two fractions of the channel bit apportionment (2) are decoded and subsequently the respective samples are summed together to give highly accurate samples.

As for the manner of arraying the resulting data of the respective channels, there are arrayed, in a sync block,

(i) channels where apportionment of bits with less than 147 kbps, including the channel bit allocation, and
(ii) the fractions of channels exceeding 147 kbps, including the channel bit allocation, in each of which a certain bit quantity, such as 128 kbps, is the maximum,

according to the channel sequence. Next, the fractions of channels exceeding 147 kbps, including the channel bit allocation, in each of which a certain bit quantity, such as 128 kbps, is exceeded, are arrayed in the channel sequence.

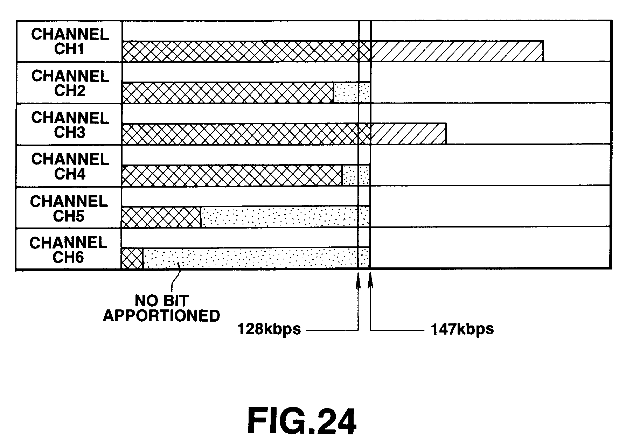

Although the number of channels is eight in the above-described embodiment, it may also be five, in which case the channels in Fig.2 are comprised of a left center channel, a center channel, a sub-woofer channel, a right channel, a surround left channel and a surround right channel. For these five channels, shown in Fig.24, the first quantization and the second quantization are carried out using the bit apportionment including channel allocation and bit apportionment not including channel bit allocation in the following manner.

The bit allocation for the five channels may be performed as shown in Fig.24. In the case of Fig.24, the channels among the eight channels in which bit apportionment exceeding 147 kbps is done by bit apportionment including channel bit allocation are channels CH1 and CH3. The channels with smaller number of bits of bit allocation, such as channel CH 6 of Fig.24 or the channel 8 of Fig.21, may be exemplified by the above-mentioned sub-woofer channel.

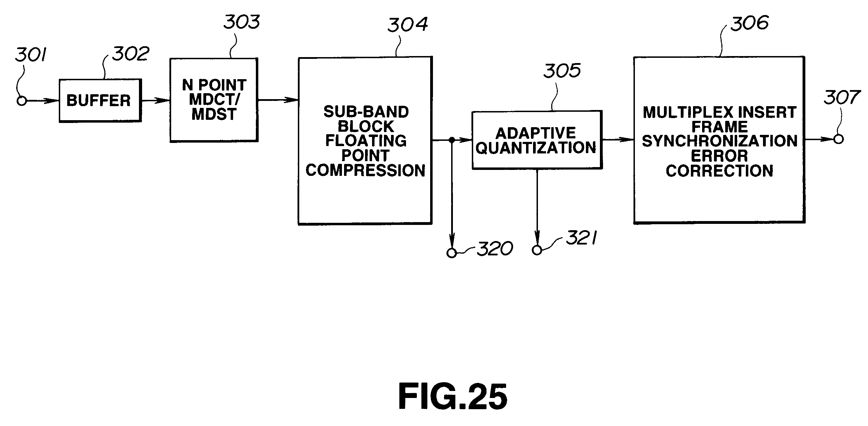

An illustrative construction of a modification of a compression encoding circuit effecting bit apportionment among respective channels is shown in Fig.25, in which only one channel is shown.

In Fig.25, digital audio signals of only one channel among plural channels of the basic information are fed to an input terminal 301.

The digital audio signals from the input terminal 301 are temporarily stored in a buffer 302 from which data are taken out as data blocks each consisting of N points or N samples, with neighboring samples being overlapped by 50%. The block-based data are transmitted to an orthogonal transform circuit 303 so as to be orthogonal-transformed by the above-mentioned MDCT and modified discrete sine transform (MDST).

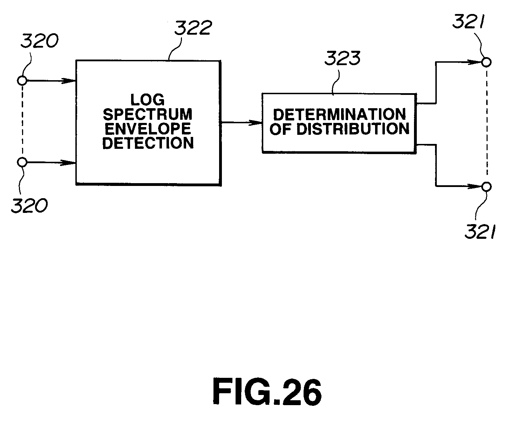

The coefficient data from the orthogonal transform circuit 303 are compressed by a sub-band block floating point compression circuit 304. The coefficient data, that is the basic information, from the sub-band block floating point compression circuit 304, is fed via a terminal 320 and terminals 320 for the respective channels shown in Fig.26 to a log spectrum envelope detection circuit 322, while being also fed to an adaptive quantization circuit 305 along with the supplementary information, that is the subsidiary information (compression conversion coefficient information) from the circuit 304, such as the word-length information or scaling factors.

The adaptive quantization circuit 305 is fed via a terminal 321 associated with each channel and via a terminal 321 of Fig.5 with the bit allocation information from a distribution determining circuit 323 which determines the channel-to-channel bit apportionment based upon the envelope information detected by a spectral envelope detection circuit 322. The adaptive quantization circuit 305 adaptively quantizes the subsidiary information and the coefficient data of each channel based upon the channel-to-channel bit apportioning information. The adaptive quantization circuit 305 outputs an adaptive quantization output (quantization conversion coefficient information) and the bit allocation information. These outputs of the adaptive quantization circuit 305 are routed to the above-mentioned multiplex insert frame synchronization and error correction circuit 306.

The multiplex insert frame synchronization and error correction circuit 306 multiplexes, for each channel, the adaptively quantized coefficient data and the subsidiary information (quantization conversion coefficient information) and the bit allocation information, adaptively quantized for each channel, and appends an error correction code to the multiplexed data, while processing the resulting data with insert frame synchronization for recording the data in e.g., the recording area 4 of Fig.1. An output of the multiplex insert frame synchronization and error correction circuit 306 is the compression encoded output of each channel.

An illustrative construction of an expansion decoding circuit as a counterpart device of the compression encoding circuit of Fig.25, is shown in Fig.27, in which only one channel is illustrated. That is, the expansion decoding circuit decodes the compression encoded digital audio signal from each channel.

In Fig.27, the high efficiency compression encoded digital audio signal is fed to an input terminal 210. This signal is processed with frame synchronization, demultiplexing and error correction for the first area by a frame synchronization demultiplexing error correction circuit 211.

The frame synchronization demultiplexing error correction circuit 211 outputs the adaptively quantized quantization conversion coefficient information and the bit allocation information. The bit allocation information is routed to a quantization step size control circuit 213. The adaptive dequantization circuit 212 dequantizes the quantization conversion coefficient information based upon the quantization step information from the quantization step size control circuit 213. The quantization compression conversion coefficients from the adaptive dequantization circuit 212 are fed to a sub-band block floating point expansion circuit 214.

The subband block floating point expansion circuit 214 performs an operation which is an inverse operation of that performed by the subband block floating point compression circuit 304 of Fig.25. An output of the expansion circuit 214 is transformed into N-point sample data by an inverse orthogonal transform circuit 215 which performs an inverse operation of that performed by the orthogonal transform circuit 303 shown in Fig.25. The N-point sample data are fed to a window overlap circuit 216 where the overlap is canceled for outputting PCM audio signals which are outputted at an output terminal 216.

The above-described compression encoded digital audio signals of the respective channels are recorded on the motion picture film 1 shown in Fig.1d. That is, the compression-encoded digital audio signals of at least the left channel, center channel, right channel, surround left channel, surround right channel and the sub-woofer channel are recorded in the first regions 4 between the perforations 3 of Fig.1d, while the compression encoded digital audio signals of at least the left center channel, right center channel, mixed left channel, center channel and the mixed right channel are recorded in the longitudinal second region 5 of Fig.1d. The audio signals of the multiple channels in their entirety are preferably recorded with overlap in the first and second regions.

Thus, even if the motion picture film of the present embodiment is severed during editing thereof, the digital audio signals of the respective channels may be restored using the information recorded in the first regions 4 between neighboring perforations 3 or in the longitudinal second region 5. Above all, if the first regions 4, in which the basic information is recorded, is severed, data of the center channel, left channel, surround left channel, right channel and the surround right channel may be regenerated using data of the center channel, mixed left channel and the mixed right channel recorded in the second region.

Although the motion picture film is given as a medium in the above-described embodiment, the disc-shaped recording media, such as an optical disc, magneto-optical disc, a phase-transition optical disc or a magnetic disc, or a tape-shaped recording medium, such as a magnetic tape, may also be employed as the recording medium of the present invention, in addition to the motion picture film.

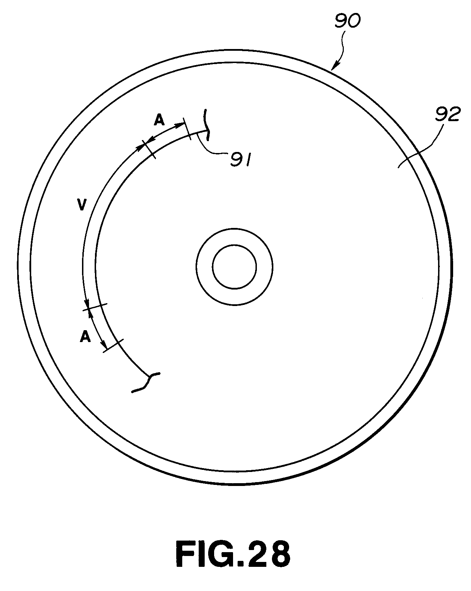

Recording on the disc-shaped recording medium is effected as shown for example in Fig.28. That is, in Fig.28, a recording track 91 provided on an information recording area 92 on a disc 90 is divided into a recording area V for recording the second information and a recording area A for recording the first digital information. The second information recorded in the recording area V and the first digital information recorded in the recording area A may be exemplified by e.g., the picture information and the sound information, respectively.

The recording medium of the present invention may also be a transmission medium, in addition to the recording medium as described above. An example of the transmission medium is a communication network, in which case the communication frame is divisionally employed by the second information and the first digital information. In case of packet communication, for example, each packet is divided into the second information and the first digital information. If, in case of employing a transmission medium, bits are allocated among plural channels, bit allocation is done among communication packets and communication frames of plural channels corresponding to plural bands divided from the transmission frequency spectrum.

With the above-described information processing method of the present embodiment and the information processing apparatus of the present invention, since the first digital information is encoded and arranged in plural regions proximate to the information region in which the second information on the motion picture film 1, disc 90 or on the communication network is arranged or in plural regions on both sides of the information region in which the second information is arranged, the second information and the first digital information may be correlated with each other as to the positions thereof on the medium. On the other hand, since the first digital information has not only the pre-set basic information but also the subsidiary information for the basis information, high-quality encoding or decoding of the basic information may be achieved using the subsidiary information.

In addition, since both the first digital information and the second information of the present embodiment include the sound information, the present embodiment may be applied to a variety of equipment handling sound signals.

With the above-described information processing method of the present embodiment and the information processing apparatus of the present invention, since the basic information is comprised of quantized samples, and the subsidiary information is comprised of the re-quantized samples of the quantization errors of the basic information, it is possible to improve the signal-to-noise ratio in encoding and decoding the basic information. Also, assuming that the basic information is the information of a lower frequency range than that of the subsidiary information, it is possible to improve the sound quality of the acoustically critical low frequency range signal if the basic information is e.g., the sound information.

The pre-set medium may be a motion picture film, a disc-shaped recording medium or a communication network. If the pre-set medium is a motion picture film, the area of the motion picture film other than the picture recording area 2 may be effectively exploited by using the recording areas 4 between the perforations 3, transversely aligned recording areas 4 between the perforations 3 on both sides of the film 1, longitudinal recording area 5 between the perforations 3 and the edge of the film 1, longitudinal recording area 4 between the film edge and the perforations 3 or the recording areas 4 between the perforations 3 as plural regions for the first digital information. On the other hand, by separately arranging the basic information and the subsidiary information in the recording regions 4 between the perforations 3 of one of the rows of the perforations 3 and in the recording regions 4 between the perforations of the other row of the perforations 3, it is possible to assure the region for the basic information and the region for the subsidiary information and to increase the amount of the recordable information.

In addition, it is possible to make effective utilization of bits by arraying the multi-channel sound information as the first digital information, compressing the basic information and the subsidiary information as the high efficiency encoded information, variably allocating bits to time-domain samples and frequency-domain samples of the basic information and the subsidiary information among the different channels and by setting the total bit apportionment for the respective information data to the totality of the channels substantially constant. This may be achieved by resolving the bit apportionment to channels to which more bits than a pre-set reference quantity are allocated into a bit quantity fraction for the basic information and a difference bit quantity fraction and by effecting variable bit allocation of various samples of the plural channels among the different channels. The bit quantity fraction for the basic information is a bit apportionment not exceeding the pre-set reference quantity at most and the difference bit quantity fraction corresponds to the difference between the bit allocation for the subsidiary information including the channel bit allocation and the bit apportionment for the basic information not including the channel bit allocation. The sample data concerning the bit apportionment for the subsidiary information can be given as a difference between sample data obtained from bit apportionment including channel bit allocation and sample data obtained from bit apportionment not including channel bit allocation, whilst the scale factor for sample data of the subsidiary information may be found from the word length and the scale factors for the sample data of the basic information.

In the present embodiment, the same quantization is carried out for respective sample data in small-sized blocks sub-divided along time and frequency. The sample data in the mini-block are produced by effecting blocking frequency analysis by orthogonal transform, such as MDCT, for each block composed of plural samples, during encoding, and by blocking frequency synthesis by inverse orthogonal transform, such as IMDCT, during decoding. The sample data may also be obtained by effecting non-blocking frequency analysis by QMF during encoding and non-blocking frequency synthesis by IQMF during decoding. With the present embodiment, the frequency bandwidth of the non-blocking frequency analysis may be equated for at least two lowermost bands and set so as to be broader with increase in frequency for matching to the psychoacoustic characteristics of the human auditory system. For the blocking frequency analysis, the block size is adaptively changed to e.g. a long mode or a short mode, and such change in the block size is effected independently for output frequency bands of at least two non-blocking frequency analyses for assuring frequency analyses conforming to characteristics of the input signals.

With the preset embodiment, bit allocation conforming to the characteristics of the input signal is achieved by changing the sum of the bit apportionment portion of the basic information of the respective channels and the bit apportionment portion of the subsidiary information in dependence upon the maximum sample magnitude or the scaling factors of the respective channels, changing the channel-to-channel bit apportionment by changing the time change of the channel-to-channel scaling factors for changing the channel-to-channel bit apportionment or by changing the time change of the channel-to-channel scaling factors for changing the channel-to-channel bit apportionment.

With the information processing apparatus of the present embodiment, each sync block is divided into a group of samples of the bit apportionment of the basic information apportioning the bit quantity exceeding a pre-set reference quantity for plural channels and another group of samples of bit apportionment of the remaining subsidiary information and the information thus split is recorded, occasionally alternately, on the pre-set medium by a magnetic head or an optical head as recording means. The expansion decoding circuit of the information processing apparatus of the present embodiment is designed to effect decoding and reproduction from the bit allocation sample groups of the basic information and subsidiary information recorded in separation from each other in one sync block on the pre-set medium so that the bit allocation sample groups may be decoded and reproduced even if these sample groups are alternately recorded on the channel basis. It is possible with the decoding means to detect the channel having a bit quantity exceeding the pre-set reference quantity since the bit apportionment quantity to the channel is set so as to be larger than or equal to the reference quantity of the subsidiary information smaller than the pres-set reference quantity.

With the medium of the present embodiment, the information encoded by the information processing method or the information processing apparatus of the present invention are arrayed and the area utilizable for such arraying is effectively utilized for improving the quality of the arrayed information.

It is seen from above that, with the information processing method and apparatus of the present invention, since it is possible to encode the first digital information and the encoded first digital information is arrayed in plural regions proximate to the information region on the pre-set medium in which the second information is arrayed and in plural regions on both sides of the information area in which the second information is arrayed, the second information and the first digital information may be correlated as to the position thereof on the medium. On the other hand, since the first digital information has not only the pre-set basic information but also the subsidiary information of the basic information, it becomes possible to effect encoding and decoding of the basic information using the subsidiary information with high quality.

On the other hand, since the first digital information contains the sound information, and the second information also has the sound information, the present invention may be applied to a variety of equipment handling the sound.

With the information processing method and apparatus of the present invention, since the basic information is the quantized sample and the subsidiary information is the re-quantized sample of the quantization error of the basic information, it is possible to improve the signal-to-noise ratio in the encoding and decoding of the basic information. In addition, if the basic information is e.g., the sound information, the low frequency range which is acoustically crucial if the basic information is the sound information may be improved in quality.

The pre-set medium may be a motion picture film, disc-shaped recording medium or a communication network. If the pre-set medium is a motion picture film, the plural regions for the first digital information may be regions between different perforations, between aligned perforations on both sides of the film, between the perforations and the film edge, between the perforations and the film edge and between perforations, for effectively utilizing the regions excluding the picture recording regions of the motion picture film. In addition, the regions for the basic information and the subsidiary information may be obtained by separately arranging the basic information and the subsidiary information between perforations of one of the rows of perforations and between perforations of the other row of perforations.

In addition, according to the present invention, effective bit utilization may be achieved by arraying the multi-channel sound information as the first digital information, compressing the basic information and the subsidiary information as the high-efficiency encoding information, variably apportioning bits for time-domain or frequency-domain samples of the basic information and the subsidiary information among plural channels and by setting the total bit apportionment quantity for the entire channels of the sum of the bit allocation quantities for the respective information data so as to be substantially constant. This may be achieved by resolving the quantity of bit apportionment the channels, to which a bit quantity exceeding a pre-set reference quantity is to be apportioned, into a bit quantity portion of the basic information which is the bit allocation not including channel bit allocation not exceeding a pre-set constant quantity at most, and a bit quantity portion equal to a difference between the bit apportionment not including the channel bit allocation of the basic information and bit apportionment including channel bit allocation bit as bit apportionment for the subsidiary information, and by effecting variable bit apportionment of the samples of the plural channels among different channels. The sample data concerning bit allocation to the subsidiary information may be given as the difference between sample data derived from bit apportionment including channel bit allocation and sample data derived from bit apportionment not including channel bit allocation, while scale factors for sample data of the subsidiary information may be found from the word length and the scaling factors for the sample data of the basic information.

In addition, according to the present invention, the same quantization is carried out for sample data within the small-sized blocks divided along time and frequency. The sample data in the mini-blocks are produced by effecting pre-set blocking frequency analyses for each block made up of plural samples during encoding and by effecting pre-set blocking frequency-synthesis during decoding. Alternatively, the sample data in the small-sized blocks may be produced by effecting pre-set non-blocking frequency analyses during encoding and by effecting pre-set blocking frequency synthesis during decoding. The frequency width for non-blocking frequency analyses may be equated for at least two lowermost frequency bands or set so as to be broader with increase in frequency in at least the highest frequency band for optimum matching to the hearing sense. For non-blocking frequency analyses and for blocking frequency analyses, polyphase quadrature filter or the quadrature mirror filter and the modified discrete cosine transform may be employed, respectively. For blocking frequency analyses, the block size may be adaptively changed depending on the time characteristics of the input signal. The block size may be changed independently for each of the output bands of at least two non-blocking frequency analyses for achieving frequency analyses suited to characteristics of the input signals.

According to the present invention, bit allocation conforming to the characteristics of the input signal is achieved by changing the sum of the bit apportionment portion of the basic information and the bit apportionment portion of the subsidiary information to the respective channels in dependence upon the maximum sample magnitude or the scale factors of the respective channels, changing the channel-to-channel bit apportionment by time changes of the amplitude information of peak or mean values or energy values of information signals of the respective channels or by changing the time change of the channel-to-channel scaling factors for changing the channel-to-channel bit apportionment.

With the information processing apparatus of the present embodiment, each sync block is divided into a group of samples of the bit apportionment of the basic information apportioning the bit quantity exceeding a pre-set reference quantity for plural channels and another group of samples of bit apportionment of the remaining subsidiary information, and the information thus split is recorded, occasionally alternately, on the pre-set medium by a magnetic head or an optical head as recording means. The expansion decoding circuit of the information processing apparatus of the present embodiment is designed to effect decoding and reproduction from the bit allocation sample groups of the basic information and the subsidiary information recorded in separation from each other in one sync block on the pre-set medium so that the bit allocation sample groups may be decoded and reproduced even if these sample groups are alternately recorded on the channel basis. It is possible with the decoding means to detect a channel having a bit quantity exceeding the pre-set reference quantity allocated thereto since the bit apportionment quantity to the channel is set so as to be larger than or equal to the reference quantity for the subsidiary information smaller than the pres-set reference quantity.

It is seen from above that, according to the present invention, the recording region of the recording medium is divided into a first region and a second region, and the basic information of plural channels is recorded in the first region, whilst the remaining subsidiary information is recorded in the second region. If the region between the film perorations is the first region and the longitudinal region is the second region, reproduction is possible using the remaining information during subsequent reproduction even although the information recorded in one of the regions is lost.

Next, with the medium of the present invention, the arrayed information may be improved in quality by arraying the information encoded by the present information processing method and apparatus for effective utilization of the arrayable region.

According to the present invention, since the quantity of bits employed for encoding the basic information and the subsidiary information may be increased not only in the compression encoding of high sound quality and high picture quality but also in the encoding of the sound or picture without compression, encoding and decoding of high sound and picture quality may be achieved, while there may be provided a medium on which the encoded information is arrayed.

## Claims

1. A method for processing the information comprising:

    encoding the first digital information to be arrayed in plural regions proximate to information regions on a pre-set medium in which the second information is arrayed; and/or
    decoding the encoded first digital information arrayed in plural regions proximate to regions on the pre-set medium in which the second information is arrayed;
    said first digital information having the pre-set basic information and the subsidiary information for completing the basic information.

2. The method for processing the information as claimed in claim 1, wherein said first digital information includes the sound information.

3. The method for processing the information as claimed in claim 1, wherein said second information includes the sound information.

4. The method for processing the information as claimed in claim 1, wherein said first digital information is the basic information among said plural channels, and said second information is other subsidiary information.

5. The method for processing the information as claimed in claim 4, wherein the basic information of the plural channels includes the audio information of at least a left channel, a center channel and a right channel, and wherein the subsidiary information includes the audio information of at least a left center channel and a right center channel.

6. The method for processing the information as claimed in any one of claims 2 to 5, wherein said basic information is the information of a frequency band lower than that of said subsidiary information.

7. The method for processing the information as claimed in any one of claims 2 to 5, wherein said subsidiary information is a requantized sample of the quantization error of the basic information.

8. The method for processing the information as claimed in any one of claims 1 to 7, wherein said pre-set medium is a motion picture film.

9. The method for processing the information as claimed in any one of claims 1 to 7, wherein said pre-set medium is a disc-shaped recording medium.

10. The method for processing the information as claimed in any one of claims 1 to 7, wherein said pre-set medium is a communication network.

11. The method for processing the information as claimed in claim 8, wherein said plural regions for said first digital information are those regions defined between the perforations of a motion picture film.

12. The method for processing the information as claimed in claim 8, wherein said plural regions for said first digital information are those regions defined between aligned perforations on both sides of a motion picture film.

13. The method for processing the information as claimed in claim 8, wherein said plural regions for said first digital information are those regions defined between the perforations of a motion picture film and an edge of said motion picture film.

14. The method for processing the information as claimed in claim 8, wherein said plural regions for said first digital information are those regions defined between the perforations of a motion picture film and an edge of said motion picture film and between the perforations.

15. The method for processing the information as claimed in claim 8, wherein said basic information and the subsidiary information are separately arrayed between perforations of a row of perforations and between perforations of the other row of perforations.

16. The method for processing the information as claimed in claims 8, 13, 14 or 15, wherein multi-channel sound signals are arrayed as said first digital information.

17. The method for processing the information as claimed in claims 8, 13, 14, 15 or 16, wherein said basic information and said subsidiary information are the high efficiency encoded information.

18. The method for processing the information as claimed in claim 17, wherein said basic information and the subsidiary information are time-domain or frequency-domain samples, variable bit allocation is performed on said time-domain and frequency-domain samples of plural channels and wherein the apportionment of total bit allocation quantity of the bit allocation quantity for the basic information and the bit allocation quantity of the subsidiary information, summed together, to the entire channels, is set so as to be substantially constant.

19. The method for processing the information as claimed in claim 17, wherein scaling factors for sample data of said subsidiary information are found from the scaling factors and word lengths of sample data of said basic information.

20. The method for processing the information as claimed in any one of claims 17 to 19, wherein a bit allocation quantity to one of plural channels to which a bit quantity exceeding a pre-set constant reference quantity is allocated is resolved into a bit quantity portion of the basic information which is the bit apportionment not including channel bit allocation and not exceeding said reference quantity at most, and a bit quantity portion corresponding to the difference between bit apportionment including channel bit allocation as bit allocation of the subsidiary information and bit apportionment not including channel bit apportionment of said basic information, and wherein variable bit apportionment is done to time-domain or frequency-domain samples of plural channels from channel to channel.

21. The method for processing the information as claimed in claims 17 or 20, wherein said sample data of bit allocation of said subsidiary information is given as a difference between sample data obtained from bit apportionment including channel bit allocation and sample data obtained from bit apportionment not including channel bit allocation.

**22.** The method for processing the information as claimed in any one of claims 17 to 21, wherein the same quantization is carried out of sample data in a small-sized block divided along time and frequency.

**23.** The method for processing the information as claimed in claim 22, wherein for producing sample data in a small-sized block divided along time and frequency, a pre-set blocking frequency analysis comprising carrying out frequency analyses for each of plural blocks consisting of plural samples is carried out during encoding and pre-set frequency synthesis comprising carrying out frequency synthesis for data processed with the blocking frequency analyses is carried out during decoding.

**24.** The method for processing the information as claimed in claim 22, wherein for producing sample data in a small-sized block divided along time and frequency, a pre-set non-blocking frequency analysis comprising carrying out frequency analyses without blocking is performed during encoding and wherein pre-set non-blocking frequency synthesis is performed on data processed with pre-set non-blocking frequency synthesis.

**25.** The method for processing the information as claimed in claim 24, wherein the frequency bandwidth of said non-blocking frequency analyses is selected to be broader with increasing frequency in at least the highest frequency band.

**26.** The method for processing the information as claimed in claim 24 or 25, wherein said blocking frequency analysis is modified discrete cosine transform.

**27.** The method for processing the information as claimed in any one of claims 24 to 26, wherein block size in said blocking frequency analysis is adaptively changed depending on time characteristics of the input signal.

**28.** The method for processing the information as claimed in claim 27, wherein the block size is changed independently for each output of at least two of the non-blocking frequency analyses.

**29.** The method for processing the information as claimed in any one of claims 18 to 28, wherein the sum of bit allocation portions for the basic information and the bit allocation portions for said subsidiary information for respective channels is changed depending on the maximum sample value or the scale factor of each channel.

**30.** The method for processing the information as claimed in any one of claims 18 to 29, wherein the channel-to-channel bit apportionment is changed with time changes in amplitude information of an energy value, a peak value or a mean value of information signals of each channel.

**31.** An apparatus for processing the information comprising:

encoding means for encoding the first digital information to be arrayed in plural regions proximate to information regions on a pre-set medium in which the second information is arrayed; and/or
decoding means for decoding the encoded first digital information arrayed in plural regions proximate to information regions on a pre-set medium in which the second information is arrayed;
wherein said first digital information has the pre-set basic information and the subsidiary information supplementing said basic information.

**32.** The apparatus for processing the information as claimed in claim 31, wherein said first digital information includes the sound information.

**33.** The apparatus for processing the information as claimed in claim 31, wherein said second information includes the sound information.

**34.** The apparatus for processing the information as claimed in any one of claim 32 or 33, wherein said basic information is the information of a frequency band lower than that of said subsidiary information.

**35.** The apparatus for processing the information as claimed in any one of claim 32 or 33, wherein said subsidiary information is a requantized sample of the basic information.

**36.** The apparatus for processing the information as claimed in any one of claims 31 to 35, wherein said pre-set medium is a motion picture film.

**37.** The apparatus for processing the information as claimed in any one of claims 31 to 35, wherein said pre-set medium is a disc-shaped recording medium.

**38.** The apparatus for processing the information as claimed in any one of claims 31 to 35, wherein said pre-set medium is a communication network.

**39.** The apparatus for processing the information as claimed in claim 36, wherein said plural regions for said first digital information are those regions defined between the perforations of a motion picture film.

**40.** The apparatus for processing the information as claimed in claim 36, wherein said plural regions for said first digital information are those regions defined between aligned perforations on both sides of a motion picture film.

**41.** The apparatus for processing the information as claimed in claim 36, wherein said plural regions for said first digital information are those regions defined between the perforations of a motion picture film and an edge of said motion picture film.

**42.** The apparatus for processing the information as claimed in claim 36, wherein said plural regions for said first digital information are those regions defined between the perforations of a motion picture film and an edge of said motion picture film and between the perforations.

**43.** The apparatus for processing the information as claimed in claim 36, wherein said basic information and the subsidiary information are separately arrayed between perforations of a row of perforations and between perforations of the other row of perforations.

**44.** The apparatus for processing the information as claimed in claims 36, 41, 42 or 43, wherein multichannel sound signals are arrayed as said first digital information.

**45.** The apparatus for processing the information as claimed in claims 36, 41, 42, 43 or 44, wherein said basic information and said subsidiary information are the high efficiency encoded information.

**46.** The apparatus for processing the information as claimed in claim 45, wherein said basic information and the subsidiary information are time-domain or frequency-domain samples, variable bit allocation is performed on said time-domain and frequency-domain samples of plural channels and wherein the apportionment of total bit allocation quantity of the bit allocation quantity for the basic information and the bit allocation quantity of the subsidiary information, summed together, to the entire channels, is set so as to be substantially constant.

**47.** The apparatus for processing the information as claimed in claim 45, wherein scale factors for sample data of said subsidiary information are found from the scaling factors and word lengths of sample data of said basic information.

**48.** The apparatus for processing the information as claimed in any one of claims 45 to 47, wherein a bit allocation quantity to one of plural channels to which a bit quantity exceeding a pre-set constant reference quantity is allocated is resolved into a bit quantity portion of the basic information which is the bit apportionment not including channel bit allocation and not exceeding said reference quantity at most, and a bit quantity portion corresponding to the difference between bit apportionment including channel bit allocation as bit allocation of the subsidiary information and bit apportionment not including channel bit apportionment of said basic information, and wherein variable bit apportionment is done to time-domain or frequency-domain samples of plural channels from channel to channel.

**49.** The apparatus for processing the information as claimed in claims 45 or 48, wherein said sample data of bit allocation of said subsidiary information is given as a difference between sample data obtained from bit apportionment including channel bit allocation and sample data obtained from bit apportionment not including channel bit allocation.

**50.** The apparatus for processing the information as claimed in any one of claims 45 to 49, wherein the same quantization is carried out of sample data in a small-sized block divided along time and frequency.

**51.** The apparatus for processing the information as claimed in claim 50, wherein for producing sample data in a small-sized block divided along time and frequency, a pre-set blocking frequency analysis comprising carrying out frequency analyses for each of plural blocks consisting of plural samples is carried out during encoding and pre-set frequency synthesis comprising carrying out frequency synthesis for data processed with the blocking frequency analyses is carried out during decoding.

**52.** The apparatus for processing the information as claimed in claim 50, wherein for producing sample data in a small-sized block divided along time and frequency, a pre-set non-blocking frequency analysis comprising carrying out frequency analyses is performed during encoding and wherein pre-set non-blocking frequency synthesis is performed on data processed with pre-set non-blocking frequency synthesis.

**53.** The apparatus for processing the information as claimed in claim 52, wherein the frequency bandwidth of said non-blocking frequency analyses is selected to be broader with increasing frequency in at least the highest frequency band.

**54.** The apparatus for processing the information as claimed in claim 52 or 53, wherein the frequency width of said non-blocking frequency analysis is selected to be broader with increase in frequency in at least the highest frequency band.

**55.** The apparatus for processing the information as claimed in any one of claims 52 to 54, wherein said blocking frequency analysis is modified discrete cosine transform.

**56.** The apparatus for processing the information as claimed in any one of claims 52 to 55, wherein the block size in said blocking frequency analysis is adaptively changed depending on time characteristics of the input signal.

**57.** The apparatus for processing the information as claimed in claim 56, wherein the block size is changed independently for each output of at least two of the non-blocking frequency analysis.

**58.** The apparatus for processing the information as claimed in any one of claims 46 to 57, wherein the sum of bit allocation portions for the basic information and the bit allocation portions for said subsidiary information for respective channels is changed depending on the maximum sample value or the scale factor of each channel.

**59.** The apparatus for processing the information as claimed in any one of claims 46 to 58, wherein the channel-to-channel bit apportionment is changed with time changes in amplitude information of an energy value, a peak value or a mean value of information signals of each channel.

**60.** The apparatus for processing the information as claimed in claim 48, wherein said encoding means separates in each sync block a bit allocation sample group of the basic information allocating a bit quantity larger than a pre-set reference quantity for plural channels from the bit allocation sample group of the remaining subsidiary information of the bit allocation sample group of the basic information for plural channels for recording on said pre-set medium.

**61.** The apparatus for processing the information as claimed in claim 60, wherein the bit allocation sample group of the basic information and the bit allocation sample group of the subsidiary information are alternately recorded in each channel.

**62.** The apparatus for processing the information as claimed in claim 46, wherein said decoding means decode and reproduce the bit allocation sample group of the basic information for plural channels and the bit allocation sample group of the subsidiary information for plural channels taken out after recording on the pre-set recording medium in separation from each other in one sync block.

**63.** The apparatus for processing the information as claimed in claim 46, wherein said decoding means decode and reproduce the bit allocation sample information of each channel alternately recorded in each channel in one sync block and said bit allocation sample group of the subsidiary information.

**64.** The apparatus for processing the information as claimed in claim 48, wherein said decoding means effects detection of a channel in which the bit quantity larger than the pre-set reference quantity is allocated depending on whether the allocation bit quantity to the channel is larger than or equal to the reference quantity of the subsidiary information smaller than said pre-set reference quantity.

**65.** A medium in which the first digital information having the basic information and the subsidiary information completing said basic information is arrayed in plural regions excluding those for arraying the second information, said basic information and the subsidiary information having been encoded by the method for processing the information as claimed in any one of claims 1 to 30.

**66.** A medium in which the first digital information having the basic information and the subsidiary information completing said basic information is arrayed in plural regions excluding those for arraying the second information, said basic information and the subsidiary information having been encoded by the apparatus for processing the information as claimed in any one of claims 31 to 64.

EP 0 734 019 A1

FIG.1a

FIG.1b

FIG.1c

FIG.1d

**FIG.2**

**FIG.3**

EP 0 734 019 A1

FIG.4

22kHz

FREQUENCY

11kHz

5.5kHz

0                    TIME ⟶                    11.6mS

# FIG.5a

22kHz

FREQUENCY

11kHz

5.5kHz

0        2.9mS        5.8mS                    11.6mS
   1.45mS

TIME ⟶

# FIG.5b

**FIG.6**

EP 0 734 019 A1

**FIG.7**

EP 0 734 019 A1

A  **CHANNEL
CH1**

a

TIME

B  **CHANNEL
CH2**

b

TIME

H  **CHANNEL
CH8**

h

TIME

**TIME BLOCKS FOR
BIT APPORTIONMENT**

# FIG.8

AMOUNT OF BIT ALLOCATION FOR BIT ALLOCATION(1)

80kbps

10kbps

0        1

TONALITY[T]

# FIG.9

AMOUNT OF BIT ALLOCATION FOR BIT ALLOCATION(1)

80kbps

10kbps

0        1

TIME RATE OF CHANGE

# FIG.10

**FIG.11**

**FIG.12**

**FIG.13**

EP 0 734 019 A1

**FIG.14**

FIG.15

FIG.16

EP 0 734 019 A1

**FIG.17**

**FIG.18**

**FIG.19**

**FIG.20**

| | |
|---|---|
| CHANNEL CH1 | |
| CHANNEL CH2 | |
| CHANNEL CH3 | |
| CHANNEL CH4 | |
| CHANNEL CH5 | |
| CHANNEL CH6 | |
| CHANNEL CH7 | |
| CHANNEL CH8 | |

NO BIT APPORTIONED    128kbps ⎯⎯ ⎯⎯ 147kbps

# FIG.21

41

ENCODER                                                    DECODER

FIG.22

EP 0 734 019 A1

FIG.23

| CHANNEL CH1 |
| CHANNEL CH2 |
| CHANNEL CH3 |
| CHANNEL CH4 |
| CHANNEL CH5 |
| CHANNEL CH6 |

NO BIT
APPORTIONED

128kbps ⎯⎯⎯⎯⎯⎯ 147kbps

**FIG.24**

**FIG.25**

EP 0 734 019 A1

320
322

LOG
SPECTRUM
ENVELOPE
DETECTION

323

DETERMINATION
OF DISTRIBUTION

321

320

321

# FIG.26

**FIG.27**

**FIG.28**

# EP 0 734 019 A1

<table>
<tr>
<td colspan="2" align="center"><strong>INTERNATIONAL SEARCH REPORT</strong></td>
<td colspan="2">International application No.<br>JCT/JP94/02056</td>
</tr>
</table>

**A. CLASSIFICATION OF SUBJECT MATTER**

Int. Cl$^6$ G11B20/10, H03M7/30

According to International Patent Classification (IPC) or to both national classification and IPC

**B. FIELDS SEARCHED**

Minimum documentation searched (classification system followed by classification symbols)

Int. Cl$^5$ G11B20/10, H03M7/30

Documentation searched other than minimum documentation to the extent that such documents are included in the fields searched

Jitsuyo Shinan Koho                1965 - 1994
Kokai Jitsuyo Shinan Koho          1971 - 1994

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, A, 5-250811 (Pioneer Video Corp.),<br>September 28, 1993 (28. 09. 93) | 1-66 |
| A | JP, A, 5-206866 (Sony Corp.),<br>August 13, 1993 (13. 08. 93) | 17-29,<br>45-66 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| February 22, 1995 (22. 02. 95) | March 14, 1995 (14. 03. 95) |

| Name and mailing address of the ISA/<br>Japanese Patent Office | Authorized officer |
|---|---|
| Facsimile No. | Telephone No. |

Form PCT/ISA/210 (second sheet) (July 1992)

49